# FASCICULE DE BREVET EUROPEEN

(11) **EP 0 956 212 B1**
(45) Date de publication et mention de la délivrance du brevet: **08.05.2002**
(21) Numéro de dépôt: 98952826.0
(22) Date de dépôt: 30.10.1998
(51) Int. Cl.: B60C 17/06, B60C 17/04

(54) **DISPOSITIF DE ROULAGE A PLAT POUR VEHICULE AUTOMOBILE ET SON PROCEDE DE MONTAGE**
NOTLAUFVORRICHTUNG FÜR AUTO UND VERFAHREN ZU SEINER MONTAGE
DEVICE FOR MOTOR VEHICLE RUNNING FLAT AND METHOD FOR MOUNTING

(30) Priorité: 30.10.1997 FR 9713618; 06.04.1998 FR 9804225
(43) Date de publication de la demande: 17.11.1999
(73) Titulaire: HUTCHINSON, 75008 Paris (FR)
(72) Inventeur: MICHELOT, Eric, F-95000 Cergy (FR); LELIEVRE, Alain, F-60530 Fresnoy en Thelle (FR); PELLETIER, Bruno, F-60340 Villers-sous-Saint-Leu (FR); CARPENTIER, Eric, F-95660 Champagne-sur-Oise (FR)
(74) Mandataire: Doireau, Marc
(86) Numéro de dépôt international: FR9802330
(87) Numéro de publication internationale: WO9922953

(56) Documents cités:
- EP-A- 0 175 534
- EP-A- 0 679 544
- EP-A- 0 721 854
- DE-A- 2 319 501
- FR-A- 2 375 062

## Description

L'invention se rapporte à un dispositif de roulage à plat pour véhicule automobile, permettant de parcourir une distance importante (d'au moins 100 km) à vitesse relativement élevée (d'au moins 80 km/h) avec un pneumatique partiellement ou totalement dégonflé, ainsi qu'un procédé de montage de ce dispositif.

Les dispositifs connus de ce type peuvent avoir une structure relativement simple lorsqu'ils sont destinés à des jantes démontables ou à des jantes spéciales mais, lorsqu'ils doivent être montés sur des jantes standard (d'une seule pièce) à rebords latéraux fixes de maintien des talons d'un pneumatique, ils sont nécessairement en plusieurs parties ayant chacune la forme d'un arc de cercle, qui sont reliées bout à bout par des moyens mécaniques de liaison à vis, à excentrique, etc... pour former un anneau de roulage que l'on peut serrer sur la jante et que l'on peut démonter et retirer de la jante malgré les rebords latéraux de celle-ci.

Un dispositif de roulage à plat comportant les caractéristiques du préambule de la revendication 1 est connu de EP-A-0 679 544.

Ces moyens de liaison et de serrage sont la cause d'inconvénients importants car leur manipulation est peu commode et parfois longue (il faut passer les mains et/ou des outils entre la jante et le pneumatique) et elle peut être critique car un mauvais serrage de l'anneau de roulage sur la jante peut entraîner sa destruction rapide en cas de roulage à plat. En outre, les moyens de liaison sont sensibles aux chocs et sont soumis en utilisation à des efforts importants qui varient dans le temps, provoquant des phénomènes de fatigue susceptibles de provoquer rapidement leur rupture et donc la destruction du dispositif de roulage à plat.

Pour équiper des véhicules de grande série, les dispositifs de roulage à plat doivent pouvoir être montés sur des jantes standard, c'est-à-dire des jantes monoblocs à rebords latéraux.

On a déjà proposé dans ce but des dispositifs formés d'au moins deux éléments en arc de cercle qui sont reliés bout à bout par des moyens de liaison par exemple à vis, à excentrique, ou autre, pour former un anneau continu que l'on serre sur la jante et que l'on peut monter et démonter de la jante malgré les rebords latéraux de celle-ci.

On a constaté que ces moyens de liaison sont souvent la cause d'une destruction prématurée des dispositifs de roulage à plat pour diverses raisons (mauvais serrage, sensibilité aux chocs et aux vibrations, phénomènes de fatigue, etc...)

La présente invention a notamment pour but d'éviter ces inconvénients.

La présente invention a également pour but d'offrir un dispositif de roulage à plat du type précité, qui soit montable facilement, sans outillage spécifique, sur une jante standard.

Elle a également pour but d'offrir un dispositif de roulage à plat du type précité, qui soit plus facile à fabriquer et à assembler que les dispositifs connus de la technique antérieure et qui ait une meilleure fiabilité.

Elle a encore pour but d'offrir un dispositif de ce type, dont les performances puissent être assurées en dépit de tolérances de fabrication relativement larges.

Elle a aussi pour but d'offrir un procédé de montage d'un tel disposifif, plus simple et plus facile à mettre en oeuvre.

Elle a pour but d'offrir un dispositif de roulage à plat pour véhicule automobile, utilisable sur une jante standard à rebords latéraux de maintien des talons du pneumatique et ayant cependant une structure beaucoup plus simple, plus performante et plus fiable que les dispositifs connus de la technique antérieure.

Elle a également pour but d'offrir un dispositif de ce type, qui soit plus facile et plus rapide à monter que ceux de la technique antérieure.

Elle propose, à cet effet, un dispositif de roulage à plat pour véhicule automobile, destiné à être monté serré sur une jante standard à rebords latéraux de maintien des talons d'un pneumatique, caractérisé en ce qu'il est constitué d'au moins deux pièces annulaires coaxiales emboîtées l'une sur l'autre, la première pièce annulaire, radialement interne étant en matière relativement rigide et formant un anneau ouvert autour de la jante, et la deuxième pièce annulaire radialement externe étant à base de matière élastiquement déformable et comprenant un anneau continu d'une seule pièce entourant la première pièce et ayant un diamètre interne sensiblement égal ou supérieur au diamètre extérieur d'un rebord latéral de la jante.

Le dispositif selon l'invention a donc l'avantage essentiel d'être totalement dépourvu des moyens de liaison et de serrage précités de la technique antérieure et d'être néanmoins montable sur des jantes standard à rebords latéraux fixes, l'assemblage du dispositif étant réalisé par emboîtement d'un anneau extérieur continu sur un anneau intérieur ouvert.

La simplicité de structure et la fiabilité du dispositif selon l'invention sont considérablement supérieures à celles des dispositifs antérieurs connus.

Selon d'autres caractéristiques de l'invention, la deuxième pièce annulaire a un diamètre intérieur légèrement inférieur au diamètre extérieur de la première pièce et est emboîtée à force sur celle-ci, ce qui assure un serrage de la première pièce sur la jante.

Avantageusement, la deuxième pièce comprend des moyens annulaires sensiblement inextensibles, qui sont par exemple noyés dans la matière constitutive de cette deuxième pièce, de sorte que l'emboîtement de la deuxième pièce sur la première se traduit par une compression de la matière de cette deuxième pièce entre la première pièce et les moyens annulaires inextensibles de la deuxième pièce et par un serrage important de la première pièce sur la jante.

Selon encore une autre caractéristique de l'invention, les surfaces de contact entre les première et deuxième pièces sont, au moins en partie, tronconiques.

Cela facilite le centrage et le montage de la deuxième pièce sur la première et de plus assure un autoblocage de la deuxième pièce sur la première en roulage à plat (lorsque ces surfaces tronconiques vont en s'élargissant de l'extérieur vers l'intérieur des pneumatiques), les efforts en roulage à plat s'exerçant sur ces pièces de l'extérieur vers l'intérieur des pneumatiques.

Enfin, ce dispositif est encore caractérisé par des moyens de maintien axial de la deuxième pièce sur la première.

Ainsi, quand la deuxième pièce a été montée et emboîtée à force sur la première, elle est maintenue positivement sur celle-ci, ce qui évite tout risque de séparation accidentelle des deux pièces en utilisation.

Dans un premier mode de réalisation de l'invention, ces moyens de maintien axial peuvent être des rainures et nervures annulaires ou analogues qui sont formées à l'interface entre la première et la deuxième pièce.

Dans un autre mode de réalisation, les moyens de maintien axial comprennent un élément annulaire formant coin entre la première et la deuxième pièce et qui est maintenu en position entre ces deux pièces par des moyens de fixation ou de blocage.

Dans une autre forme de réalisation de l'invention, le dispositif comprend une pièce annulaire intermédiaire en matière relativement rigide, qui forme un anneau ouvert et est interposée entre la première pièce annulaire et la deuxième.

Cela permet, notamment, de réduire les épaisseurs radiales de la première pièce et de la pièce annulaire intermédiaire qui sont en matière relativement rigide et donc de faciliter leur montage sur la jante.

De préférence, les surfaces de contact entre la première pièce et la pièce intermédiaire sont, au moins en partie, tronconiques et des moyens de maintien axial de la pièce intermédiaire sur la première sont prévus, tels par exemple que des rainures et nervures annulaires ou analogues formées à l'interface entre la première pièce et la pièce intermédiaire.

De façon générale, le dispositif selon l'invention est particulièrement destiné à équiper les roues de véhicules de tourisme mais peut également équiper les roues de véhicules plus importants et se révèle extrêmement performant, des essais ayant montré que ce dispositif permet un roulage à plat dans des conditions extrêmes de conduite.

De plus, ce dispositif est extrêmement peu sensible aux chocs.

L'invention propose également un procédé de montage d'un dispositif de roulage à plat sur une roue de véhicule automobile, ce dispositif comprenant au moins une première pièce annulaire radialement interne et une deuxième pièce annulaire intermédiaire en matière relativement rigide, ouvertes en au moins un point de leur périphérie et destinées à être montées l'une sur l'autre autour de la jante de la roue, et une pièce annulaire radialement externe continue et coaxiale aux deux précédentes, cette pièce radialement externe étant sensiblement inextensible et ayant un diamètre interne supérieur au diamètre externe du rebord de jante, caractérisé en ce qu'il consiste à monter la pièce annulaire ouverte radialement interne sur la jante de la roue, cette pièce radialement interne étant bloquée sur la jante en translation axiale, à introduire la pièce annulaire intermédiaire à l'intérieur du pneumatique et à la placer autour de la jante au voisinage de la pièce annulaire radialement interne, à introduire la pièce annulaire radialement externe à l'intérieur du pneumatique et à la monter sur la pièce annulaire intermédiaire, puis à pousser l'ensemble formé par la pièce intermédiaire et la pièce radialement externe sur la pièce annulaire radialement interne jusqu'à encliquetage, les surfaces annulaires en regard de la pièce radialement interne et de la pièce intermédiaire ayant des formes conjuguées, par exemple sensiblement tronconiques, avec des moyens tels que des nervures et rainures annulaires de formes conjuguées, ces surfaces annulaires coopérant entre elles pour assurer à la fois le serrage de la pièce radialement interne sur la jante et le positionnement axial et le blocage en position de la pièce annulaire intermédiaire sur la pièce radialement interne.

Le montage selon l'invention d'un dispositif de roulage à plat comprend donc une opération d'emboîtement à force d'une pièce annulaire ouverte en matière relativement rigide sur une autre pièce annulaire ouverte en matière relativement rigide, ce qui est beaucoup plus facile à réaliser que l'emboîtement à force d'une pièce continue en matière élastiquement déformable sur une pièce en matière relativement rigide.

De plus, les pièces en matière relativement rigide, telle par exemple qu'une matière plastique du type polyamide, peuvent être réalisées avec des tolérances de fabrication relativement très faibles, de sorte qu'il est possible de les dimensionner pour assurer leur ajustement et permettre leur emboîtement l'une sur l'autre en leur appliquant un effort relativement faible.

Selon une autre caractéristique de l'invention, la pièce annulaire radialement externe a un diamètre interieur inférieur au diamètre extérieur de la pièce annulaire intermédiaire à l'état libre, et le procédé consiste alors à resserrer la pièce annulaire intermédiaire en rapprochant ses extrémités l'une de l'autre, avant de monter la pièce annulaire radialement externe sur la deuxième autour de la jante de la roue.

Ce rapprochement des extrémités de la pièce annulaire intermédiaire peut être effectué de façon simple, au moyen d'un outil approprié tel qu'une pince, la pièce annulaire intermédiaire étant dimensionnée pour avoir un diamètre extérieur inférieur au diamètre intérieur de la pièce annulaire radialement externe quand ses extrémités sont rapprochées l'une de l'autre, ce qui permet un montage facile et rapide de la pièce annulaire radialement externe sur la pièce intermédiaire.

L'invention concerne également un procédé de démontage d'un dispositif de roulage à plat du type précité monté sur une jante de roue comme indiqué ci-dessus, ce procédé étant caractérisé en ce qu'il consiste à pousser sur la pièce annulaire intermédiaire dans une direction opposée à la direction de poussée au montage, pour dégager de la pièce annulaire radialement interne l'ensemble formé par la deuxième et la pièce annulaire radialement externe, puis à resserrer sur elle-même la pièce annulaire intermédiaire, à dégager la pièce annulaire radialement externe de la pièce intermédiaire et à la sortir de la jante, puis à sortir successivement de la jante la pièce intermédiaire et la pièce annulaire radialement interne.

Le flanc de la pièce annulaire intermédiaire forme une surface rigide sur laquelle on peut exercer une poussée suffisante pour dégager la pièce annulaire intermédiaire de la pièce radialement interne. Il est plus sûr et plus facile de procéder ainsi qu'en exerçant d'abord une poussée sur la pièce annulaire radialement externe (qui est déformable) pour la dégager de la pièce annulaire intermédiaire.

L'invention propose également un dispositif de roulage à plat pour véhicule automobile, susceptible d'être monté sur une roue ou démonté par exécution du procédé décrit ci-dessus, et comprenant au moins une pièce radialement interne et une pièce intermédiaire annulaires ouvertes en matière relativement rigide et destinées à être montées l'une sur l'autre autour de la jante de la roue, et une pièce annulaire radialement externe continue et sensiblement inextensible destinée à être montée sur la pièce annulaire intermédiaire, caractérisé en ce que la surface périphérique extérieure de la pièce annulaire intermédiaire est formée avec une gorge ou rainure circonférentielle de réception de la pièce annulaire radialement externe, cette rainure ou gorge étant à section transversale sensiblement en U.

Cette configuration de la pièce annulaire intermédiaire facilite le positionnement axial de la pièce annulaire radialement externe sur la pièce intermédiaire, ce positionnement étant défini de façon positive par les parois latérales de la gorge ou rainure précitée. La partie radialement interne de la pièce annulaire radialement externe a une forme adaptée à celle de cette gorge ou rainure, c'est-à-dire une section sensiblement en U, et elle peut être réalisée avec des tolérances de fabrication plus serrées que dans la technique antérieure.

Dans un mode de réalisation préféré de l'invention, la pièce annulaire radialement externe est à section sensiblement rectangulaire.

Une telle pièce peut être réalisée en utilisant des techniques connues de fabrication de courroies de transmission, avec une bonne précision dimensionnelle.

Avantageusement, cette pièce annulaire radialement externe comprend deux couches de caoutchouc ou analogue de dureté différente, la couche radialement interne de cette pièce annulaire radialement externe étant par exemple moins dure que la couche radialement externe, ce qui permet de compenser et d'absorber plus facilement des écarts dimensionnels dus aux tolérances de fabrication.

Selon une autre caractéristique avantageuse de l'invention, cette pièce annulaire radialement externe est réversible, les éléments inextensibles qu'elle contient constituant une fibre neutre.

Il est alors possible, si nécessaire, de la retourner sur elle-même, sa face supérieure devenant sa face inférieure et inversement, notamment pour rattraper ou compenser une tolérance de fabrication relativement large.

De façon générale, l'invention facilite beaucoup le montage et le démontage des dispositifs de roulage à plat pour véhicule automobile et, en améliorant la précision de la mise en place et du positionnement de ces dispositifs sur les jantes de roue, augmente notablement leur fiabilité.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une demi-vue schématique en coupe axiale représentant un dispositif selon l'invention monté sur une jante à l'intérieur d'un pneumatique ;
- les figures 2 et 3 sont des vues semblables à la figure 1 et illustrent des phases de montage du dispositif selon l'invention ;
- les figures 4 à 7 représentent schématiquement des variantes de réalisation ;
- la figure 8 est une vue schématique en coupe partielle selon la ligne VIII de la figure 7 ;
- les figures 9 et 10 représentent schématiquement d'autres variantes de réalisation de l'invention ;
- la figure 11 est une vue schématique partielle en coupe axiale d'une roue de véhicule automobile, équipée d'une variante perfectionnée préférée d'un dispositif de roulage à plat selon l'invention ;
- les figures 12 à 15 sont des vues schématiques illustrant le montage d'une variante perfectionnée et le démontage de ce dispositif ;
- les figures 16 et 17 illustrent schématiquement un mode de montage d'une variante perfectionnée d'un dispositif selon l'invention sur une jante de roue ;
- la figure 18 est une vue schématique partielle de face d'un dispositif de roulage à plat selon l'invention ;
- la figure 19 est une vue schématique en coupe axiale selon la ligne A-A de la figure 18 ;
- les figures 20 à 24 sont des vues correspondant à la figure 10 et représentent diverses variantes de réalisation de l'invention ;
- la figure 25 est une vue schématique partielle en coupe axiale d'une variante de réalisation de la pièce intermédiaire annulaire du dispositif selon l'invention.

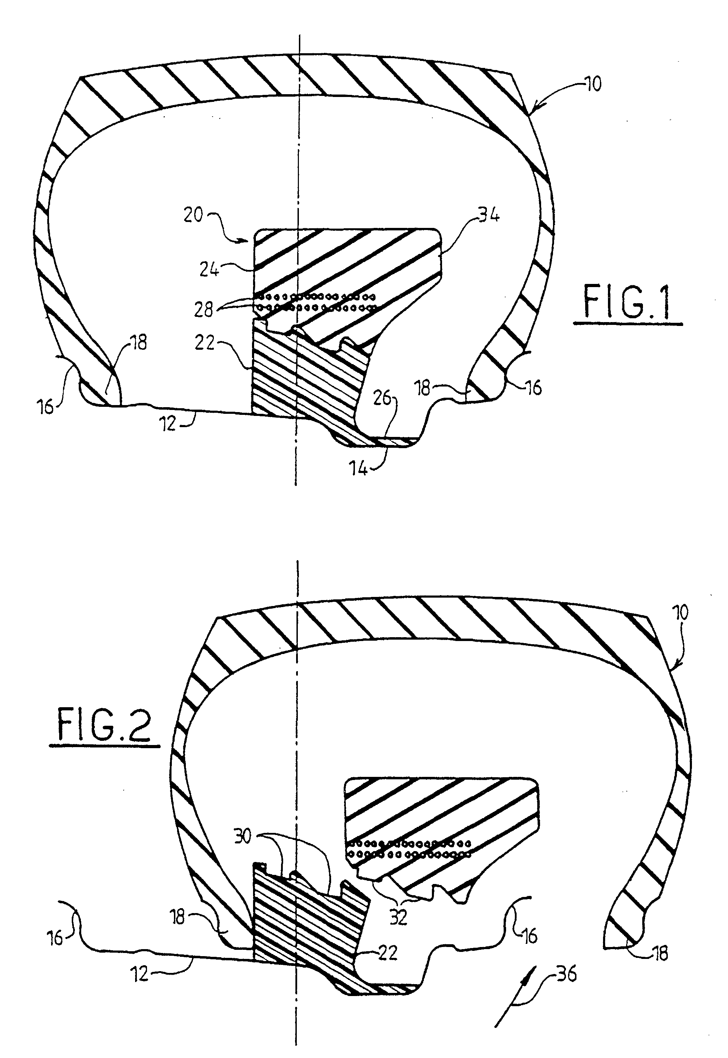

Sur les figure 1 à 25 on a utilisé les mêmes référence pour désigner les mêmes éléments.

On a représenté en figure 1 un pneumatique 10 d'un type standard pour véhicule de tourisme, qui est monté sur une jante 12 également d'un type standard, c'est-à-dire une jante monobloc comprenant une gorge de jante 14 et des rebords latéraux fixes 16 de maintien des talons 18 du pneumatique, les rebords latéraux 16 s'étendant radialement à l'extérieur de la surface de la jante 12 et de la gorge de jante 14. C'est la raison pour laquelle, dans la technique antérieure, les anneaux de roulage à plat qui sont montés à l'intérieur des pneumatiques 10 sur les jantes 12, sont réalisés en deux ou plusieurs parties incurvées en arc de cercle reliées bout à bout par des moyens de liaison et de serrage à vis ou à excentrique. Comme indiqué plus haut, ces moyens de liaison sont sensibles aux chocs et peuvent avoir une durée de vie courte, en raison des phénomènes de fatigue auxquels ils sont soumis.

La présente invention apporte une solution simple, économique et particulièrement fiable et performante à ce problème.

Dans le mode de réalisation de la figure 1, un anneau 20 de roulage à plat comprend deux pièces annulaires coaxiales 22, 24 dont la première, radialement interne 22 est appliquée sur la surface extérieure de la jante 12 et comprend un rebord latéral 26 s'étendant à l'intérieur de la gorge de jante 14 et dont la deuxième radialement externe 24 est emboîtée sur la première et l'entoure extérieurement, la première pièce annulaire radialement interne 22 formant un anneau ouvert en au moins un point de sa périphérie, tandis que la deuxième forme un anneau continu.

La première pièce annulaire radialement interne 22 est en une matière relativement rigide, telle par exemple qu'un polyamide commercialisé sous la dénomination NYRIM comme déjà indiqué dans des brevets antérieurs de la demanderesse, et a un diamètre interne qui correspond sensiblement à celui de la surface extérieure de la jante 12, et un diamètre externe qui est sensiblement égal ou supérieur au diamètre extérieur des rebords latéraux 16 de la jante.

La deuxième pièce annulaire 24 radialement externe est en une matière élastiquement déformable telle qu'un caoutchouc ou un élastomère et a un diamètre interne sensiblement égal ou supérieur au diamètre externe des rebords latéraux 16 de la jante et légèrement inférieur au diamètre externe de la première pièce annulaire 22 de telle sorte que, quand la deuxième pièce 24 est emboîtée sur la première pièce radialement interne 22, elle vient refermer et serrer celle-ci sur la surface de la jante 12.

La deuxième pièce radialement externe 24 comprend au moins un élément annulaire sensiblement inextensible tel qu'une bande métallique ou de matière plastique, une bande de tissu inextensible ou encore des nappes de câblés 28 comme représenté en figure 1, ces nappes de câblés étant du même type que celles prévues dans les courroies de transmission de puissance et étant noyées à l'intérieur du caoutchouc ou de l'élastomère de la deuxième pièce radialement externe 24, en s'étendant autour de l'axe de la jante.

Dans ce cas, c'est la compression du caoutchouc ou de l'élastomère situé entre les nappes de câblés 28 et la surface intérieure de la deuxième pièce annulaire radialement externe 24, qui assure le serrage de la première pièce radialement interne sur la jante 12 et son maintien en place. En outre, la déformabilité de cette partie de la deuxième pièce radialement externe permet de lui donner un diamètre interne très légèrement inférieur au diamètre externe des rebords latéraux 16 de la jante, si nécessaire.

La première pièce annulaire radialement interne 22 et la deuxième pièce annulaire radialement externe 24 ont des surfaces extérieure et intérieure respectivement de forme tronconique pour faciliter le centrage et le montage de la deuxième pièce radialement externe 24 sur la première pièce radialement interne 22, comme le verra ci-après.

En outre, des rainures et des nervures annulaires 30, 32 de formes complémentaires sont formées dans la surface extérieure de la première pièce radialement interne 22 et dans la surface intérieure de la deuxième pièce radialement externe 24 pour assurer le maintien et le blocage axial de la deuxième pièce radialement externe 24 sur la première radialement interne.

Les dimensions extérieures de la deuxième pièce radialement externe 24 sont déterminées en fonction des caractéristiques de la jante sur laquelle le dispositif de roulage à plat doit être monté, des caractéristiques des pneumatiques et du véhicule automobile correspondants et des performances recherchées.

On voit que, dans le mode de réalisation de la figure 1, la deuxième pièce radialement externe 24 comprend un rebord latéral 34 orienté vers le flanc extérieur du pneumatique 10 pour s'opposer au déjantage en virage en cas de roulage à plat, et pour limiter le sous-virage pour une roue avant à plat et le survirage pour une roue arrière à plat.

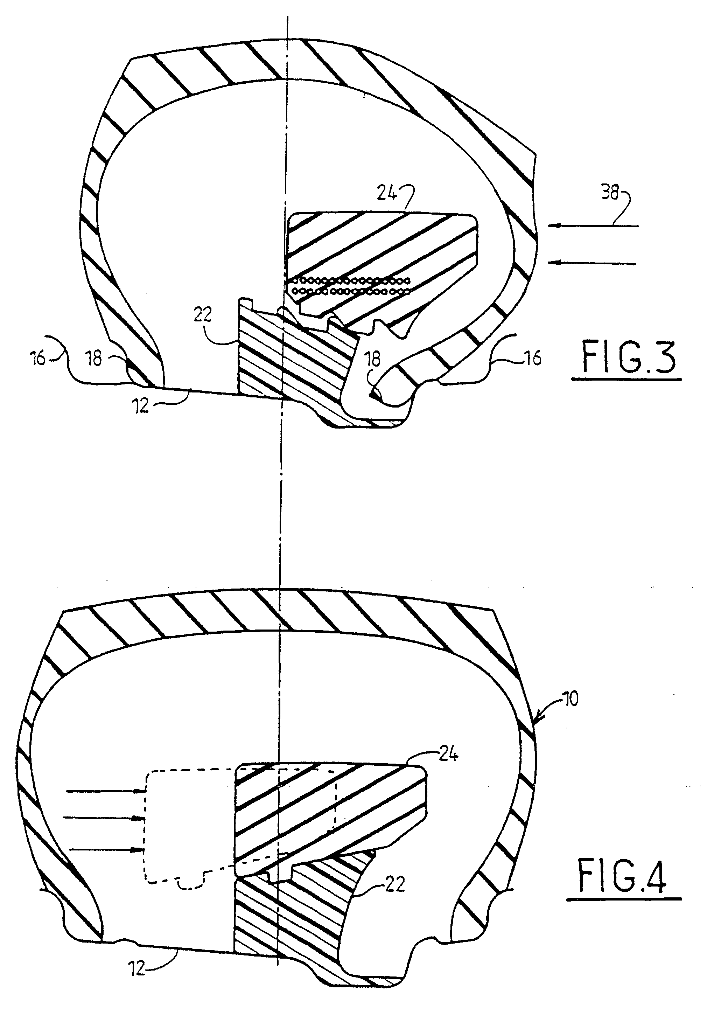

Les principales étapes de montage du dispositif selon l'invention de la figure 1 sur la jante 12 sont représentées schématiquement aux figures 2 et 3.

On commence par engager un talon 18 du pneumatique sur la jante 12 comme représenté en figure 2, puis on place la première pièce radialement interne 22 du dispositif sur la jante 12, ce qui est réalisable assez facilement puisque cette première pièce radialement interne 22 est ouverte ou fendue en au moins un point de sa périphérie et qu'on peut la déformer légèrement en décalant ses deux extrémités l'une par rapport à l'autre, pour engager l'une de ses extrémités sur la jante 12 et engager ensuite progressivement le reste de la première pièce radialement interne 22 sur la jante.

Le talon 18 du pneumatique et la première pièce radialement interne 22 se trouvant sur la jante dans la position représentée en figure 2, on peut introduire la deuxième pièce radialement externe 24 à l'intérieur du pneumatique dans le sens indiqué par la flèche 36 en déformant légèrement le talon extérieur 18 du pneumatique, et on amène ensuite cette deuxième pièce radialement externe 24 au dessus de la jante comme représenté en figure 2.

Les surfaces tronconiques extérieure et intérieure respectivement de la première pièce radialement interne 22 et de la deuxième pièce radialement externe 24 permettent de centrer la deuxième pièce radialement externe 24 et de l'engager partiellement sur la première comme représenté schématiquement en figure 3, ce qui laisse suffisamment de place pour rentrer le talon extérieur 18 du pneumatique à l'intérieur de la jante. Ensuite, au moyen d'une presse de garage ou de n'importe quel autre moyen équivalent, on exerce une pression sur le flanc extérieur du pneumatique comme indiqué par les flèches 38 pour emboîter à force la deuxième pièce radialement externe 24 sur la première radialement interne, ce qui a pour effet de serrer assez fortement la première pièce radialement interne 22 sur la jante 12 et mettre en compression la partie radialement interne de la deuxième pièce radialement externe 24, en raison de l'augmentation de son diamètre interne. Lorsque la deuxième pièce est correctement emboîtée sur la première pièce annulaire radialement interne 22 comme représenté en figure 1, elle est automatiquement maintenue en place par les nervures 32 de sa surface intérieure qui sont engagées dans les rainures 30 de la surface extérieure de la première pièce radialement interne 22.

Bien entendu, le nombre, les formes et les dimensions de ces rainures et nervures peuvent être très divers.

Le démontage du dispositif est réalisable au moyen de la même presse par application d'une pression sur la deuxième pièce radialement externe 24 depuis le flanc intérieur du pneumatique.

L'inclinaison sur l'axe de la jante des surface tronconique externe de la première pièce radialement interne 22 et de la surface tronconique interne de la deuxième pièce radialement externe 24 est déterminée, dans le mode de réalisation qui vient d'être décrit, pour permettre l'emboîtement de la deuxième pièce radialement externe 24 sur la première sous l'effet d'une poussée exercée sur le flanc extérieur du pneumatique, comme déjà indiqué.

Une inclinaison inverse de ces surfaces tronconiques est également possible, comme dans le mode de réalisation représenté schématiquement en figure 4.

Dans ce cas, et comme on le comprend aisément, le montage du dispositif selon l'invention sur la jante 12 consiste à placer d'abord la deuxième pièce radialement externe 24 du dispositif autour de la jante 12 dans la position représentée en traits pointillés, puis à mettre en place la première pièce radialement interne 22 sur la jante 12 et à pousser la deuxième pièce radialement externe 24 dans le sens indiqué par les flèches, depuis le flanc intérieur du pneumatique, pour l'emboîter sur la première pièce radialement interne 22.

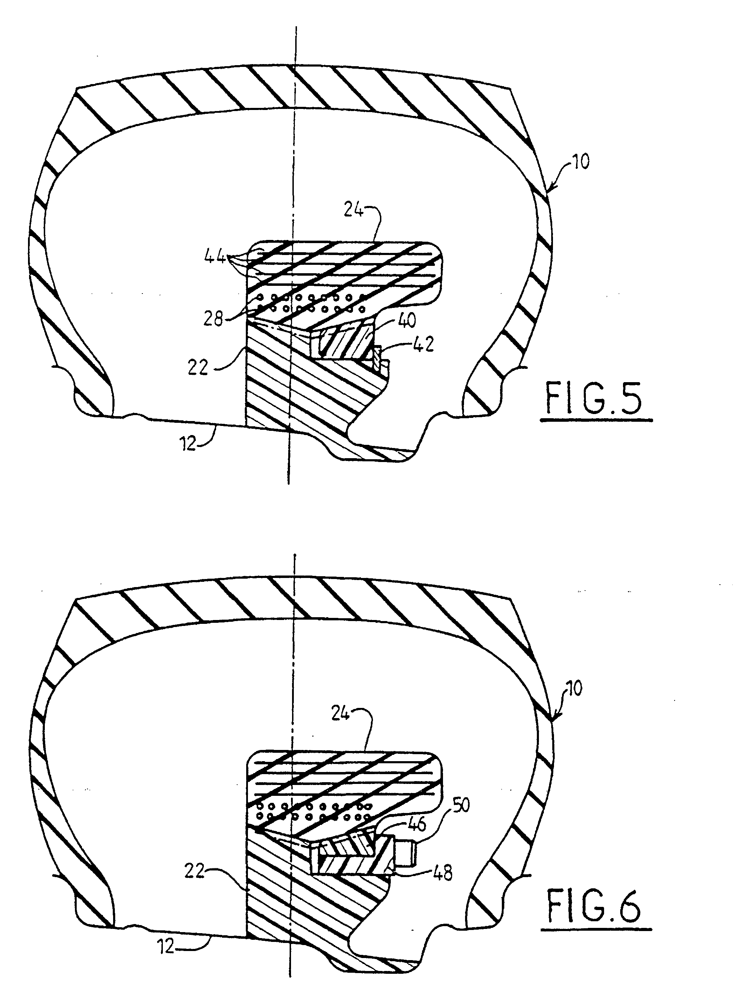

Dans le mode de réalisation de la figure 5, les moyens de maintien ou de blocage de la deuxième pièce radialement externe 24 sur la première pièce radialement interne 22 comprennent, non plus des rainures et nervures complémentaires de leurs surfaces tronconiques, mais un élément annulaire 40 formant coin, que l'on engage à force entre une surface extérieure de la première pièce radialement interne 22 et une surface tronconique intérieure de la deuxième pièce radialement externe 24, l'élément annulaire 40 étant maintenu en position axiale sur la première pièce radialement interne 22 par une butée amovible 42 telle qu'une rondelle fendue engagée dans une gorge de la surface extérieure de la première pièce radialement interne 22.

Dans ce mode de réalisation, la surface intérieure de la deuxième pièce radialement externe 24 est de forme biconique, son diamètre allant en augmentant depuis le milieu de cette pièce vers l'intérieur et vers l'extérieur du pneumatique, une première partie conique de cette surface intérieure coopérant avec une surface conique complémentaire de l'élément annulaire 40, l'autre partie conique de cette surface intérieure coopérant avec une surface conique complémentaire de la première pièce radialement interne 22.

Ainsi, par poussée de l'élément annulaire 40 depuis le flanc extérieur du pneumatique, on emboîte la deuxième pièce annulaire radialement externe 24 sur la première et on serre la première pièce annulaire radialement interne 22 sur la jante 12.

On voit également, en figure 5, que la deuxième pièce annulaire radialement externe 24 comprend, en plus dès nappés de câblés 28 inextensibles, des bandes parallèles 44 de matière inextensible qui sont radialement à l'extérieur des nappes de câblés 28, afin d'éviter tout risque de déformation de la pièce radialement externe 24 en utilisation.

L'élément annulaire 40 peut former un anneau continu ou être ouvert en au moins un point de sa périphérie. Dans le premier cas, il doit être monté sur une surface tronconique de la première pièce radialement interne 22 pour la serrer sur la jante quand il est poussé entre les deux pièces. Dans le second cas, il peut être monté sur une surface cylindrique de la première pièce radialement interne, comme représenté en figure 5.

Dans le mode de réalisation de la figure 6, l'emboîtement de la deuxième pièce radialement externe 24 sur la première et son blocage en position sont assurés par un élément annulaire 46 ouvert formant coin, porté par une couronne annulaire 48 fendue radialement et comportant une surface cylindrique interne filetée pour pouvoir être vissée sur une surface cylindrique externe filetée correspondante de la première pièce annulaire radialement interne 22. Des pions 50 sont prévus sur la couronne 48 pour faciliter son entraînement en rotation autour de son axe et son vissage sur la première pièce radialement interne 22.

L'emboîtement et le maintien ou le blocage de la deuxième pièce radialement externe 24 sur la première pièce radialement interne 22 sont donc assurés par vissage de la couronne 48 sur la première pièce annulaire radialement interne 22.

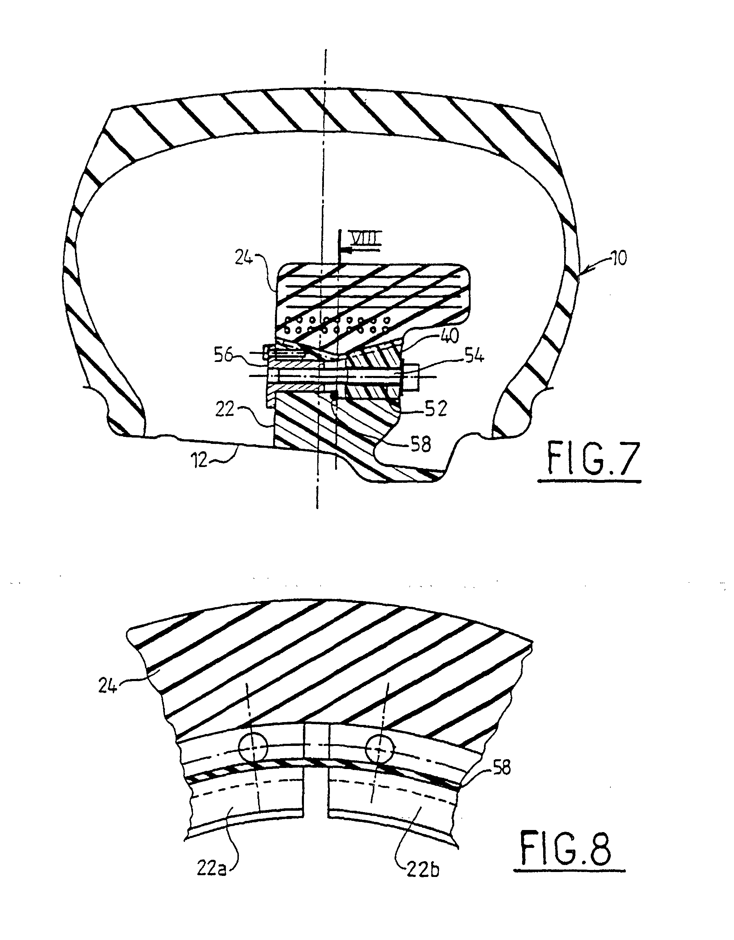

Dans le mode de réalisation représenté schématiquement aux figures 7 et 8, l'emboîtement et le maintien de la deuxième pièce annulaire radialement externe 24 sur la première pièce annulaire radialement interne 22 sont assurés au moyen d'un élément annulaire 40 semblable à celui représenté en figure 5, mais qui comporte des trous 52 parallèles à son axe pour la réception de boulons 54 vissés dans des écrous 56 montés dans des orifices correspondants de la première pièce annulaire radialement interne 22 ou noyés dans la matière constitutive de celle-ci. La surface intérieure de la deuxième pièce radialement externe 24 est biconique comme déjà décrit et coopère avec une surface extérieure conique de l'élément annulaire 40 et une surface extérieure conique d'inclinaison opposée formée sur la première pièce annulaire radialement interne 22. Dans ces conditions, le vissage des boulons 54 dans les écrous 56 assure l'emboîtement à force et le maintien de la deuxième pièce annulaire radialement externe 24 sur la première pièce annulaire radialement interne 22.

La première pièce annulaire radialement interne 22 peut être réalisée en deux parties semi-circulaires 22a et 22b comme représenté schématiquement en figure 8, ce qui facilite leur montage sur la jante 12, ces deux parties semi-circulaires 22a, 22b pouvant être facilement maintenues appliquées sur la jante 12, jusqu'au vissage des boulons 54, par un joint torique 58 en caoutchouc monté dans une gorge de la surface périphérique extérieure de ces parties semi-circulaires 22a, 22b.

Lorsque l'élément annulaire 40 est fixé sur ces parties semi-circulaires 22a, 22b par les boulons 54, on reconstitue une pièce annulaire radialement interne 22 serrée sur la jante 12.

En variante, l'élément annulaire 40 ou 48 peut être bloqué par encliquetage sur la surface périphérique extérieure de la première pièce radialement interne 22.

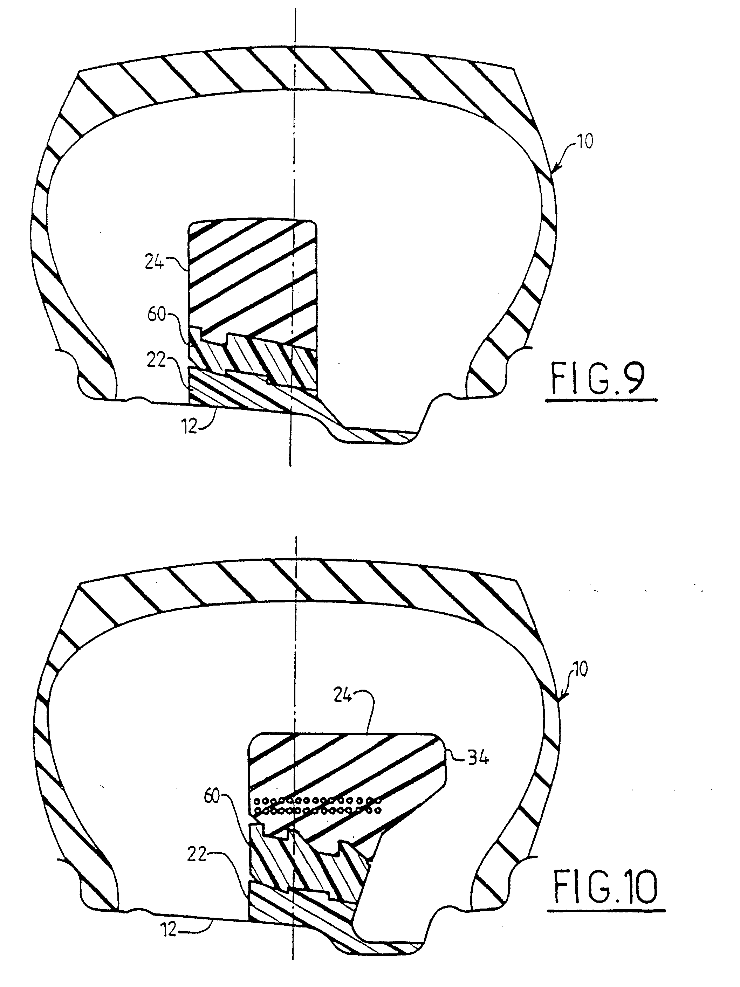

On a représenté aux figures 9 et 10 deux variantes de réalisation du dispositif selon l'invention, dans lesquelles une pièce intermédiaire 60 en forme d'anneau ouvert, en matière relativement rigide, par exemple la même que celle de la première pièce annulaire radialement interne 22, est interposée entre cette première pièce radialement interne 22 et la deuxième pièce annulaire radialement externe 24, ce qui permet par exemple de diviser par deux la hauteur radiale de la première pièce annulaire radialement interne 22 et donc de faciliter sa mise en place sur la jante 12.

Dans le mode de réalisation représenté, la surface extérieure de la première pièce 22, les surfaces intérieure et extérieure de la pièce intermédiaire 60 et la surface intérieure de la deuxième pièce annulaire radialement externe 24 sont tronconiques et sont formées avec des rainures et nervures du type précité assurant le maintien en place, après emboîtement, de la pièce annulaire intermédiaire 60 sur la première pièce annulaire radialement interne 22 et de la deuxième pièce annulaire radialement externe 24 sur la pièce annulaire intermédiaire 60.

Le montage est extrêmement simple et rapide :

On met en place la première pièce annulaire radialement interne 22 sur la jante 12, moyennant une légère déformation de cette pièce comme déjà indiqué, on met en place la pièce annulaire intermédiaire 60 sur la première pièce annulaire radialement interne 22 moyennant une légère déformation de cette pièce intermédiaire, puis on positionne la deuxième pièce annulaire radialement externe 24 sur la pièce intermédiaire 60 et on la met en place en la poussant depuis le flanc extérieur du pneumatique, au moyen d'une presse comme déjà décrit.

La deuxième pièce annulaire radialement externe 24 assure le serrage de la pièce intermédiaire 60 sur la première pièce radialement interne 22, ainsi que le serrage de la première pièce radialement interne 22 sur la jante 12.

Le mode de réalisation représenté en figure 10 diffère de celui de la figure 9 par le nombre et la forme des rainures et nervures circonférentielles de maintien des trois pièces annulaires l'une sur l'autre et en ce que la deuxième pièce annulaire radialement externe 24 comporte, comme déjà décrit, un rebord latéral 34 orienté vers le flanc extérieur du pneumatique 10.

Dans tous les modes de réalisation décrits, la première pièce annulaire radialement interne 22, ainsi que la pièce annulaire intermédiaire 60, peuvent être réalisées en deux ou plusieurs parties incurvées en arc de cercle, pour faciliter leur montage autour de la jante, ces parties étant aisément maintenues en place les unes au bout des autres au moyen d'un joint torique ou analogue logé dans une gorge de leur surface périphérique extérieure, comme déjà décrit pour le mode de réalisation des figures 7 et 8.

La première pièce annulaire radialement interne 22 et la pièce intermédiaire 60 peuvent aussi être réalisées en plusieurs parties reliées bout à bout par des éléments clipsés pour être maintenues sur la jante jusqu'au montage de la deuxième pièce radialement externe 24. Elle peuvent aussi être formées d'un anneau continu ouvert en un point de sa périphérie, mais comprenant plusieurs zones déformables (2, 3 ou davantage) permettant leur disposition autour de la jante. Cela permet notamment de réaliser des pièces nervurées, plus légères, en une matière plastique ayant un module d'élasticité élevé. Dans ce cas, la deuxième pièce annulaire radialement externe 24 en caoutchouc peut avoir un diamètre interne important et une épaisseur radiale relativement faible.

On peut aussi, bien entendu, combiner le mode de réalisation des figures 9 et 10 avec ceux des figures précédentes, par exemple en remplaçant la première pièce annulaire radialement interne 22 des modes de réalisation des figures 5 et 6 par une première pièce annulaire radialement interne 22 et une pièce annulaire intermédiaire 60 comme dans les modes de réalisation des figures 9 et 10.

Il peut en outre être avantageux de disposer une couche de caoutchouc ou analogue entre la jante et la surface interne de la première pièce, afin de rattraper ou compenser des tolérances de fabrication, compenser d'éventuelles irrégularités de la surface de la jante (par exemple des points de soudure du voile) et augmenter le coefficient de frottement entre la jante et le dispositif de roulage à plat.

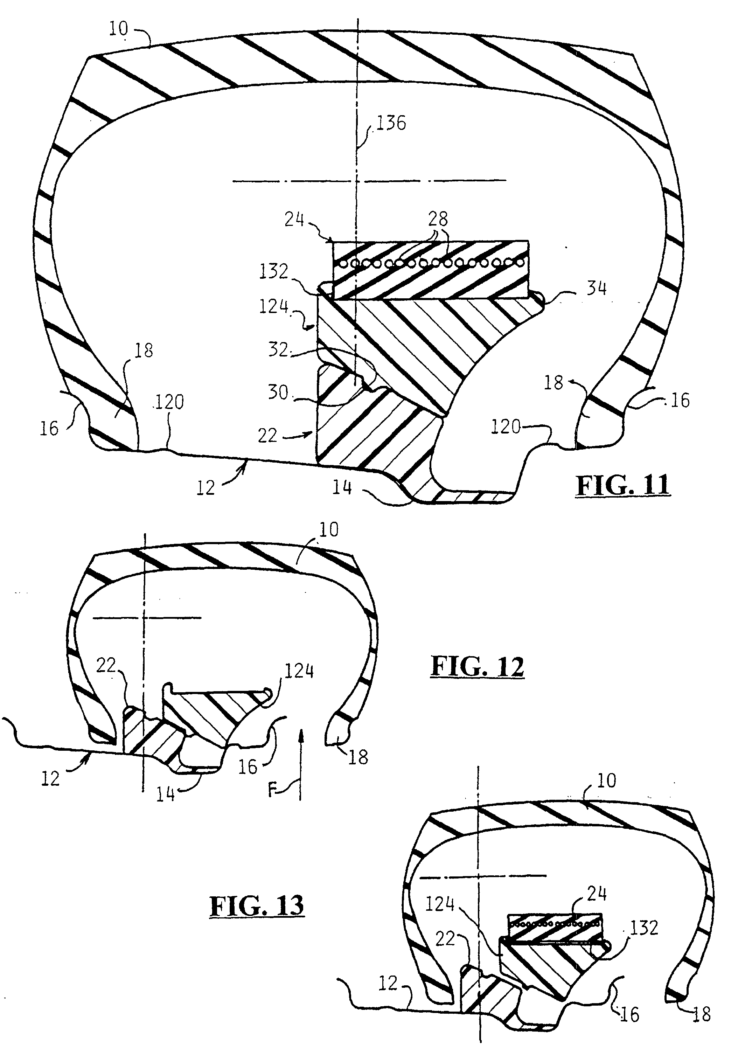

Sur les figures 11 à 25, on peut voir une variante perfectionnée du dispositif de roulage selon l'invention dont la mise en oeuvre est plus aisée.

On se réfère aux figures 11 à 15 qui représentent schématiquement un mode préféré de réalisation d'un dispositif de roulage à plat selon l'invention, destiné à être monté sur une roue de véhicule automobile du type standard, dont la jante 12 est monobloc non démontable et comporte des rebords latéraux 16 d'appui et de maintien des talons 18 d'un pneumatique 10 du type sans chambre à air.

De façon classique, la jante 12 de la roue est formée avec un renfoncement annulaire ou gorge de jante 14 et avec deux nervures circonférentielles 120 de retenue des talons 18 du pneumatique, la nervure 120 située du côté extérieur de la roue (le côté droit sur les figures 11 à 15) faisant davantage saillie à l'intérieur du pneumatique que l'autre nervure 120 située du côté intérieur de la roue, le flanc extérieur du pneumatique étant soumis à des efforts plus importants en virage que le flanc intérieur du pneumatique.

La variante perfectionnée du dispositif de roulage à plat selon l'invention comprend une pièce radialement interne 22 en matière relativement rigide, telle qu'une matière plastique, une pièce annulaire intermédiaire 124 en matière relativement rigide telle qu'une matière plastique, et une pièce annulaire radialement externe 24 sensiblement inextensible, les deux premières pièces annulaires 22, 124 étant ouvertes en au moins un point de leur périphérie, tandis que la pièce annulaire radialement externe 24 est continue.

La pièce annulaire radialement interne 22 est placée sur la jante 12, en partie à l'intérieur de la gorge de jante 14 et a une forme conjuguée de celle de la jante 12 pour être immobilisée en translation dans une direction parallèle à l'axe de la roue et être en butée dans le sens extérieur-intérieur de la roue. La pièce annulaire intermédiaire 124 est montée sur la pièce annulaire radialement interne 22, les surfaces annulaires en regard des pièces 22 et 124 ayant des formes conjuguées tronconiques et comprenant l'une au moins une rainure annulaire 30 et l'autre au moins une nervure annulaire 32 ayant des formes correspondantes, permettant de monter la pièce annulaire intermédiaire 124 sur la pièce radialement interne par emboîtement et encliquetage, la nervure 32 de la pièce intermédiaire 124 étant logée dans la rainure 30 de la pièce radialement interne 22 et assurant le positionnement axial et le maintien en position axiale de la pièce intermédiaire 124 sur la pièce radialement interne 22.

Comme on le voit sur la figure 11, les surfaces tronconiques conjuguées des pièces 22 et 124 vont en s'élargissant de l'extérieur vers l'intérieur de la roue, et les rainures et nervures 30, 32 précitées ont une face latérale droite et sensiblement perpendiculaire à l'axe de la roue du côté intérieur de la roue, et une autre face latérale oblique ou incurvée en direction du côté extérieur de la roue, de sorte que la pièce annulaire intermédiaire 124 est maintenue par butée sur la pièce radialement interne 22 quand elle est soumise à des efforts axiaux orientés de l'extérieur vers l'intérieur de la roue.

La surface périphérique extérieure de la pièce intermédiaire 124 est formée avec une gorge ou rainure 132 en U dans laquelle vient se loger la pièce annulaire radialement externe 24, cette gorge ou rainure 132 ayant une face latérale du côté intérieur de la roue qui est plus haute que sa face latérale du côté extérieur de la roue, ce qui facilite le montage et le démontage de la pièce annulaire radialement externe sur la pièce annulaire intermédiaire 124 comme on le verra ci-dessous, et ce qui permet également d'améliorer le maintien axial de la pièce radialement externe 24 sur la pièce intermédiaire 124 en cas d'efforts appliqués sur le dispositif de roulage à plat de l'extérieur vers l'intérieur du pneumatique. Le fond de la gorge 132 est sensiblement parallèle à l'axe de la pièce 124.

La pièce annulaire radialement externe 24 est à section sensiblement rectangulaire et comprend au moins une nappe de câblés 28 sensiblement inextensibles, réalisés par exemple en polyester, en fibres de verre, en fibres de "KEVLAR™", en métal, etc... qui forment des spires voisines ou sensiblement jointives à l'intérieur d'une masse de caoutchouc ou de toute matière appropriée ayant un module d'élasticité relativement faible, une pièce annulaire 24 telle que celle représentée en figure 11 pouvant être réalisée par mise en oeuvre des procédés classiques de fabrication de courroies de transmission de puissance, avec une assez bonne précision dimensionnelle.

Comme on le voit en figure 11, le dispositif de roulage à plat est excentré par rapport au plan médian équatorial 136 de la roue et se trouve davantage du côté du flanc extérieur du pneumatique 10, la pièce annulaire intermédiaire 124 présentant de plus un rebord latéral 34 orienté vers le flanc extérieur du pneumatique et formant butée pour ce flanc en cas de roulage à plat ou avec un pneumatique partiellement dégonflé, pour éviter le déjantage du pneumatique.

Les pièces annulaires 22, 124 sont avantageusement réalisées en une matière plastique du type polyamide telle que du "NYRIM". Les pièces 22, 124 peuvent être massives ou nervurées pour réduire leur poids. L'épaisseur radiale de la pièce 24 est par exemple de l'ordre de 20 mm.

Le procédé de montage de ce dispositif va maintenant être décrit en référence aux figures 12 à 14.

On commence d'abord, comme représenté en figure 12, par écarter le talon extérieur 18 du pneumatique du rebord latéral correspondant 16 de la jante pour ménager entre eux un espace annulaire permettant d'introduire les pièces annulaires 22, 124 à l'intérieur du pneumatique autour de la jante 12, comme indiqué très schématiquement par la flèche F.

On place d'abord la pièce annulaire radialement interne ouverte 22 sur la jante 12, cette pièce 22 venant se positionner automatiquement à l'intérieur de la gorge de jante 14, comme déjà indiqué, une faible déformation de la pièce annulaire radialement interne 22, obtenue en décalant axialement ses extrémités l'une par rapport à l'autre, permet de l'introduire assez facilement autour de la jante 12, en procédant progressivement, et cela bien que le diamètre intérieur de la pièce annulaire radialement interne 22 soit nettement inférieur au diamètre extérieur du rebord 16 de la jante.

On procède de même avec la pièce annulaire intermédiaire 124 et on l'engage partiellement sur la pièce annulaire radialement interne 22 de façon à ce que cette pièce intermédiaire 124 repose sur la pièce annulaire radialement interne 22 et sur la nervure annulaire extérieure 120 de la jante, comme représenté.

Ensuite (figure 13), on introduit la pièce annulaire radialement externe 24 à l'intérieur du pneumatique et on la place autour de la pièce annulaire intermédiaire 124, ce qui est relativement facile du fait que le diamètre interne de la pièce annulaire radialement externe 24 est assez nettement supérieur au diamètre externe du rebord 16 de jante 12. Pour la mise en place de la pièce radialement externe 24 sur la pièce intermédiaire 124, on diminue le diamètre extérieur de celle-ci en rapprochant ses deux extrémités l'une de l'autrè, ce qui a été représenté schématiquement en figure 13, de telle sorte que le diamètre intérieur de la pièce radialement externe 24 est alors sensiblement égal ou légèrement supérieur au diamètre extérieur de la pièce intermédiaire 124, du côté extérieur du pneumatique.

On peut prévoir des cavités dans la face latérale extérieure de la pièce intermédiaire 124 au voisinage de ses extrémités, pour les rapprocher l'une de l'autre au moyen d'une pince ou analogue, et également pour les maintenir rapprochées l'une de l'autre au moyen d'un cavalier en U ou analogue dont les branches sont engagées dans les cavités précitées.

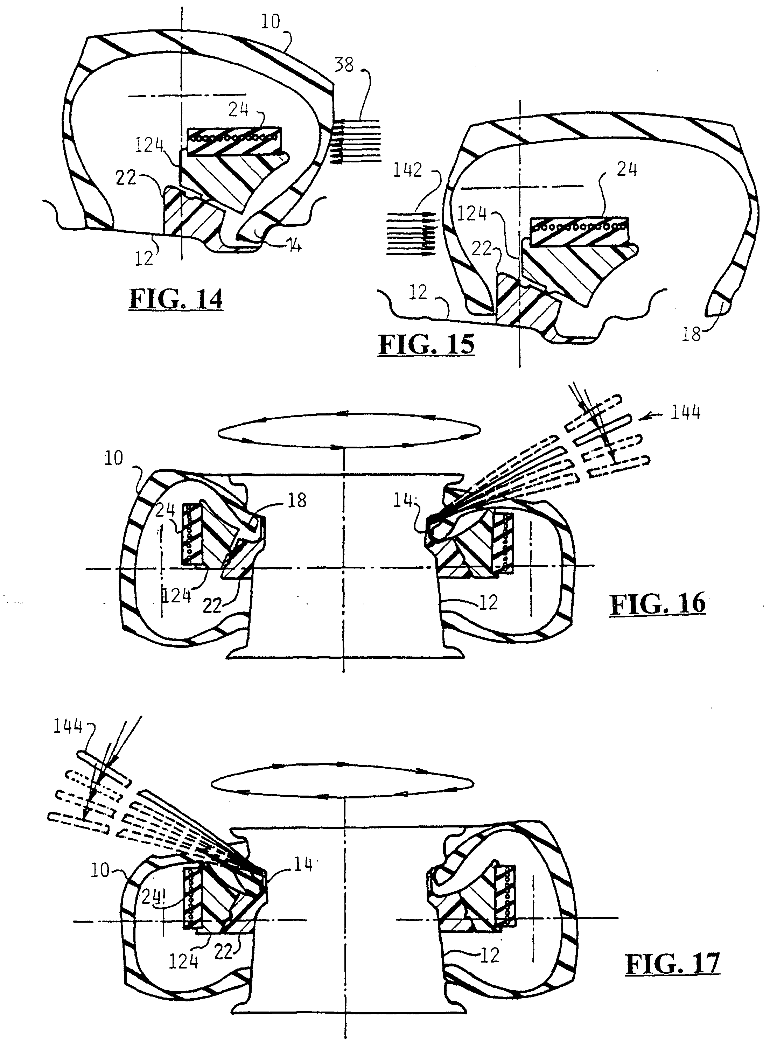

Lorsque la pièce annulaire radialement externe 24 est montée sur la pièce intermédiaire 124 en étant placée à l'intérieur de la gorge 132, on libère les extrémités de la pièce intermédiaire 124 qui se détend légèrement à l'intérieur de la pièce radialement externe 24, on rentre à l'intérieur de la jante le talon extérieur 18 du pneumatique comme représenté schématiquement en figure 14 et on exerce sur le flanc extérieur du pneumatique une poussée axiale de l'extérieur vers l'intérieur, comme indiqué par les flèches 38, au niveau de la pièce intermédiaire 124 pour l'emboîter à force sur la première jusqu'à encliquetage, cet encliquetage étant obtenu lorsque la nervure 32 de la pièce intermédiaire 124 s'engage dans la rainure 30 de la pièce radialement interne 22 en produisant un bruit caractéristique nettement audible.

Le dispositif de roulage à plat est alors assemblé, dans la position représentée en figure 11.

Il reste ensuite à mettre en place les talons du pneumatique contre les rebords de jante en gonflant le pneumatique.

Pour le démontage de ce dispositif de roulage à plat, on procède comme représenté schématiquement en figure 15, c'est-à-dire que, le pneumatique étant dégonflé, on sort son talon extérieur 18 du rebord de jante et on exerce une poussée axiale sur la pièce annulaire intermédiaire 124 dans le sens intérieur-extérieur comme indiqué schématiquement par les flèches 142. Cela permet de déboîter de la pièce radialement interne 22 l'ensemble formé par la pièce intermédiaire 124 et la pièce radialement externe 24, après quoi on resserre à nouveau la pièce intermédiaire 124 en rapprochant ses extrémités l'une de l'autre pour sortir la pièce radialement externe 24 de la gorge 132 de la pièce intermédiaire 124, et on sort la pièce radialement externe 24 du pneumatique en la faisant passer par l'espace annulaire dégagé entre le talon extérieur 18 du pneumatique et le rebord de la jante.

On sort ensuite la pièce intermédiaire 124 de la jante et du pneumatique en procédant à l'inverse de ce qui a été fait pour son montage à l'intérieur du pneumatique, puis on sort de même la pièce annulaire radialement interne 22 de la jante et du pneumatique.

Pour exercer sur les flancs du pneumatique les poussées axiales schématisées en 38 et 142, on peut utiliser une machine monte/démonte-pneus que l'on trouve dans tous les garages de réparation automobile et qui comprend un support rotatif sur lequel on pose la roue et un organe "détalonneur" au moyen duquel on peut appliquer une pression locale sur le flanc du pneumatique.

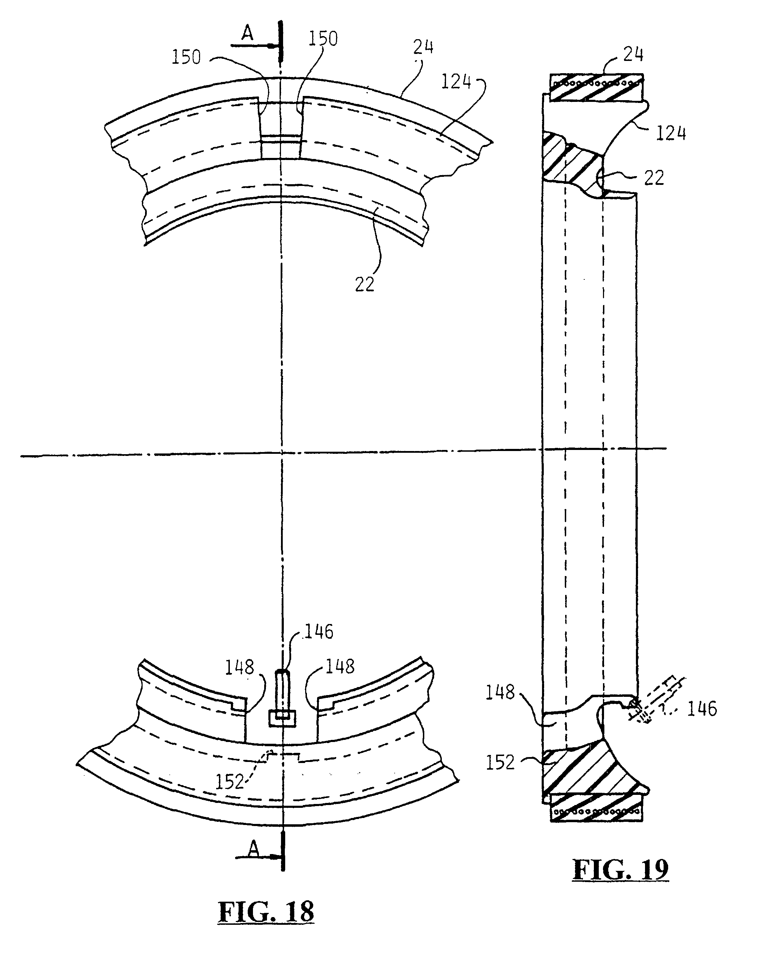

On peut aussi utiliser un simple levier démonte-pneus, comme représenté schématiquement aux figures 16 et 17 dans le cas du montage du dispositif de roulage à plat sur une jante de roue.

Pour cela (figure 16), la roue est posée à plat avec son côté extérieur sur le dessus, la pièce annulaire radialement interne 22 étant en place autour de la jante, la pièce annulaire intermédiaire 124 étant partiellement engagée sur la pièce radialement interne et la pièce annulaire radialement externe 24 étant en place sur la pièce intermédiaire 124. Le talon extérieur 18 du pneumatique est poussé jusqu'à l'intérieur de la gorge de jante 14 et, en un point de la périphérie de la roue, on introduit un levier démonte-pneus 144 à l'intérieur la gorge de jante, de telle sorte que l'extrémité de ce levier soit à l'intérieur de la gorge de jante et qu'une partie intermédiaire du levier soit en appui sur le flanc extérieur du pneumatique, au niveau du rebord latéral 34 de la pièce intermédiaire 124.

En poussant ce levier vers le bas comme indiqué schématiquement en figure 16, on pousse la pièce intermédiaire 124 sur la pièce radialement interne 22 jusqu'à encliquetage en un point de leur périphérie.

On recommence ensuite la même opération en différents points de la périphérie du pneumatique, comme indiqué par exemple en figure 17, jusqu'à ce que la pièce annulaire intermédiaire 24 soit complètement emboîtée et encliquetée sur la pièce radialement interne 22, cet encliquetage complet produisant un bruit caractéristique audible.

Il ne reste plus ensuite qu'à mettre en place les talons 18 du pneumatique au niveau des rebords latéraux de la jante en gonflant le pneumatique.

L'angle au sommet des surfaces tronconiques conjuguées de la pièce radialement interne 22 et de la pièce intermédiaire 124 est relativement faible, par exemple de 30 à 50° environ, de sorte que l'effort d'emboîtement de la pièce intermédiaire 124 sur la pièce radialement interne 22 n'est pas très important. De même, l'effort qu'il faut appliquer à la pièce intermédiaire 124 pour la déboîter de la pièce radialement interne 22 n'est pas très important, grâce aux formes arrondies coopérantes des faces latérales extérieures de la rainure 30 et de la nervure 32 précitées, mais est nettement suffisant pour que les différentes pièces restent maintenues en place en utilisation.

Le diamètre interne de la pièce annulaire radialement externe 24 est déterminé pour maintenir les pièces 22 et 124 serrées l'une sur l'autre et sur la jante 12 respectivement en résistant aux efforts de roulage, lorsque cette pièce radialement externe 24 est en place sur la pièce intermédiaire 124.

La pièce annulaire radialement interne 22 peut être immobilisée en rotation sur la jante 12 par la valve 146 de gonflage du pneumatique (figures 18 et 19) lorsque cette valve est métallique, la pièce radialement interne 22 étant placée sur la jante de telle sorte que la valve de gonflage 146 s'étende entre ses extrémités 148.

L'ouverture formée entre les extrémités 150 de la pièce annulaire intermédiaire 124 est diamétralement opposée à la valve de gonflage 146. La pièce annulaire intermédiaire 124 comprend une nervure locale 152 en saillie sur sa surface interne, cette nervure étant diamétralement opposée aux extrémités 150 de la pièce intermédiaire 124 de façon à être engagée entre les extrémités 148 de la pièce radialement interne 22 et à immobiliser en rotation la pièce intermédiaire 124 sur la pièce radialement interne 22.

Les extrémités 150 de la pièce intermédiaire 124 sont séparées l'une de l'autre à l'état libre d'une. distance qui est au moins égale ou supérieure à la différence entre la dimension périphérique externe de la pièce intermédiaire 124 et la dimension périphérique interne de la pièce radialement externe 24 de telle sorte que, quand ces extrémités 150 sont rapprochées l'une de l'autre, la dimension périphérique externe de la pièce intermédiaire 124 devient égale ou légèrement inférieure à la dimension périphérique interne de la pièce radialement externe 24.

La distance entre les extrémités 148 de la pièce annulaire radialement interne 22 est déterminée pour permettre un bon équilibrage en rotation du dispositif de roulage à plat lorsque les ouvertures des pièces annulaires 22 et 124 sont diamétralement opposées l'une à l'autre comme représenté schématiquement aux figures 18 et 19.

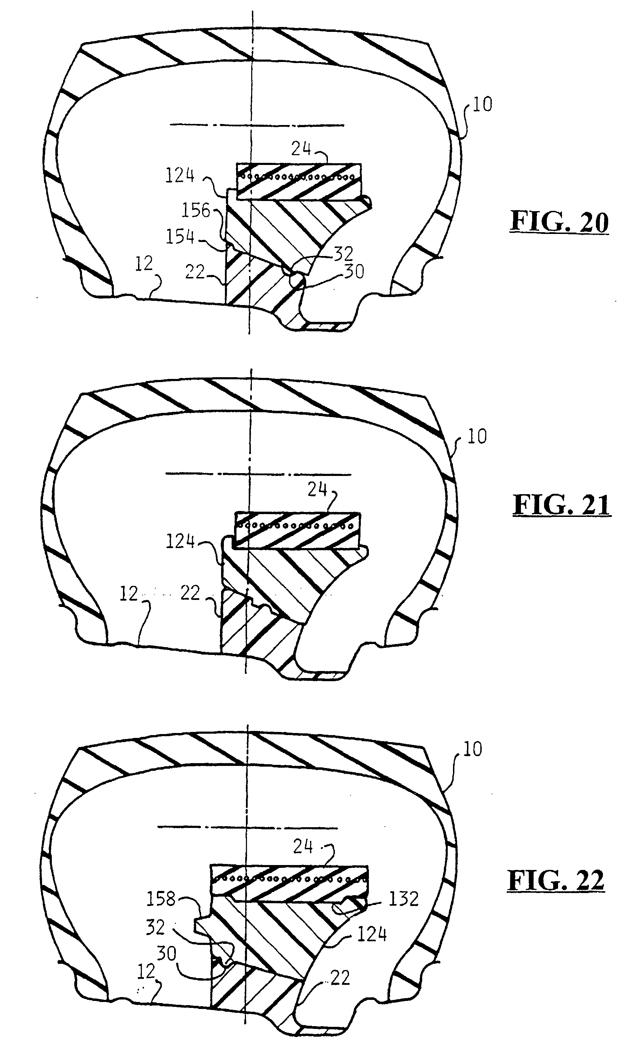

Dans la variante de réalisation représentée en figure 20, le dispositif de roulage à plat diffère de celui des figures précédentes par la configuration des surfaces tronconiques conjuguées de la pièce radialement interne 22 et de la pièce intermédiaire 124.

La surface périphérique tronconique de la pièce radialement interne 22 est formée avec une rainure 30 à section arrondie du côté de son flanc extérieur et avec un rebord radial 154 sur son flanc intérieur, la surface périphérique interne de la pièce intermédiaire 124 étant de forme complémentaire et comprenant donc une nervure 32 à section incurvée au voisinage de son flanc extérieur, et un décrochement 156 sur son flanc intérieur.

Cette configuration permet de réduire l'effort d'emboîtement de la pièce intermédiaire 124 sur la pièce radialement interne 22.

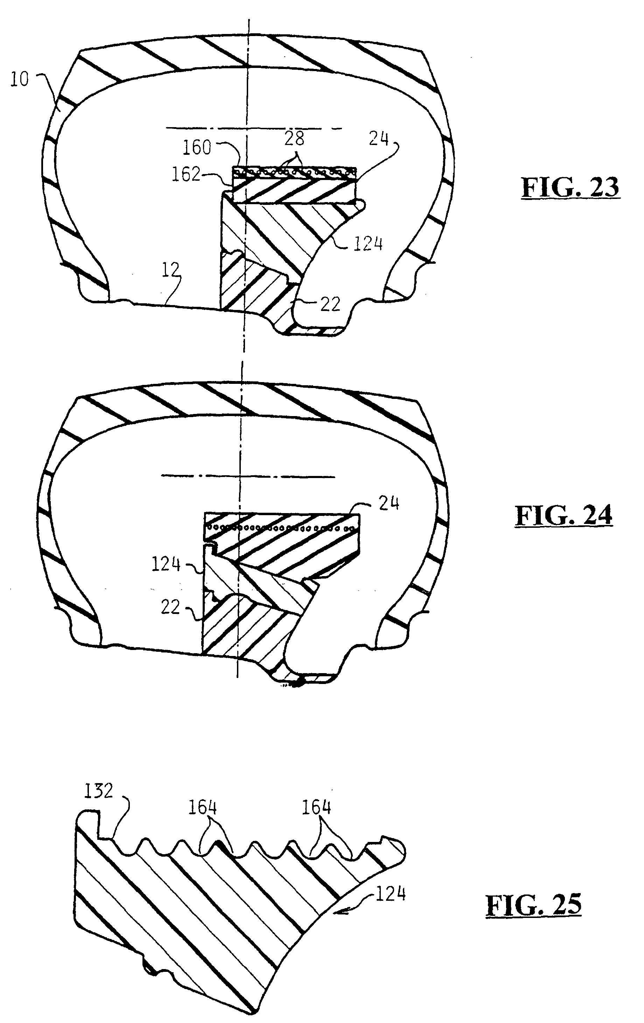

Dans la variante de réalisation de la figure 21, les surfaces tronconiques des pièces 22 et 124 sont formées chacune avec une rainure et une nervure, la rainure formée dans la surface périphérique extérieure de la pièce radialement interne 22 recevant la nervure formée sur la surface périphérique intérieure de la pièce intermédiaire 124, tandis que la nervure formée sur la surface périphérique extérieure de la pièce radialement interne 22 s'engage dans la rainure formée dans la surface périphérique intérieure de la pièce intermédiaire 124.

Dans la variante de réalisation représentée en figure 22, la rainure 30 formée dans la surface périphérique extérieure de la pièce radialement interne 22 et la nervure 32 formée dans la surface périphérique intérieure de la pièce intermédiaire 124 sont plus proches des flancs intérieurs de ces pièces que dans le mode de réalisation des figures 11 à 15, et le flanc intérieur de la pièce intermédiaire 124 est formé avec un bossage annulaire 158 formant une surface d'appui sur laquelle on viendra exercer une poussée comme représenté schématiquement par les flèches 142 en figure 15, pour le démontage du dispositif de roulage à plat selon l'invention.

En outre, dans cette variante de réalisation de la figure 22, la gorge 132 formée dans la surface périphérique extérieure de la pièce intermédiaire 124 a des parois latérales qui divergent l'une de l'autre vers l'extérieur, la surface périphérique intérieure de la pièce radialement externe 24 étant de forme complémentaire, ce qui facilite le rattrapage des tolérances de fabrication au montage de la pièce annulaire radialement externe 24 sur la pièce intermédiaire 124.

Dans la variante de réalisation de la figure 23, la surface périphérique extérieure de la pièce radialement interne 22 est formée, au voisinage de son. flanc intérieur, avec une nervure à section arrondie qui s'engage dans une rainure de forme complémentaire de la surface périphérique intérieure de la pièce intermédiaire 124, et comprend sur son flanc extérieur un décrochement annulaire dans lequel s'engage un rebord périphérique radial du flanc intérieur de la pièce intermédiaire 124.

En outre, la pièce annulaire radialement externe 24 est formée de deux couches de matières ayant des duretés différentes, une couche extérieure 160 de dureté plus grande contenant les câblés inextensibles 38 et une couche intérieure 162 de dureté plus faible, qui est engagée dans la gorge de la surface périphérique extérieure de la pièce intermédiaire 124 et dont la dureté plus faible permet de mieux compenser les tolérances de fabrication.

Dans la variante de réalisation représentée en figure 24, le dispositif de roulage à plat diffère des précédents essentiellement en ce que la pièce annulaire radialement externe 24 n'est plus à section rectangulaire, mais comporte une surface périphérique interne de forme tronconique qui vient se loger dans une gorge de la surface périphérique externe de la pièce intermédiaire 124, le fond de cette gorge formant également une surface tronconique par rapport à l'axe de la pièce intermédiaire 124, les surfaces tronconiques précitées allant en s'élargissant de l'extérieur vers l'intérieur de la roue.

Cette configuration facilite le montage de la pièce radialement externe 24 sur la pièce intermédiaire 124, mais augmente le volume et la masse de la pièce annulaire radialement externe 24.

Dans la variante de réalisation de la figure 25, qui représente la section de la pièce annulaire intermédiaire 124, le fond de la gorge 132 qui reçoit la partie périphérique interne de la pièce annulaire radialement externe 24, n'est plus plan, mais ondulé et formé avec une série de rainures circonférentielles 164. Cela permet de réduire les efforts de montage sur la pièce annulaire radialement interne 22 de l'ensemble formé par les deuxième et pièce radialement externes annulaires 124, 24, la réduction de la surface de contact entre la pièce intermédiaire 124 et la pièce radialement externe 24 permettant de réduire la compression de la matière de la pièce annulaire radialement externe 24.

De façon générale, le verrouillage et le déverrouillage de la pièce annulaire intermédiaire sur la première peuvent être réalisés avec tout outil ou toute machine permettant d'appliquer une pression localisée ou circonférentielle sur le flanc du pneumatique.

## Revendications

1. Dispositif de roulage à plat pour véhicule automobile, destiné à être monté serré sur une jante standard (12) à rebords latéraux (16) de maintien des talons (18) d'un pneumatique, **caractérisé en ce qu'**il est constitué d'au moins deux pièces annulaires coaxiales (22, 24) emboîtées l'une sur l'autre, la pièce radialement interne étant en matière relativement rigide et formant un anneau ouvert autour de la jante, la pièce radialement externe étant à base de matière élastiquement déformable et comprenant un anneau continu d'une seule pièce entourant la pièce annulaire radialement interne (22) et ayant un diamètre interne sensiblement égal ou supérieur au diamètre extérieur d'un rebord latéral (16) de la jante.

2. Dispositif selon la revendication 1, **caractérisé en ce que** la pièce radialement externe (24) a un diamètre interne légèrement inférieur au diamètre externe de la pièce annulaire radialement interne (22) et est emboîtée à force sur celle-ci.

3. Dispositif selon la revendication 1 ou 2, **caractérisé en ce que** la pièce annulaire radialement externe (24) comprend des moyens annulaires (28, 44) sensiblement inextensibles, par exemple noyés dans la matière constitutive de la pièce radialement externe.

4. Dispositif selon l'une des revendications précédentes, **caractérisé en ce que** les surfaces de contact entre les deux pièces coaxiales (22, 24) sont, au moins en partie, tronconiques.

5. Dispositif selon l'une des revendications précédentes, **caractérisé en ce qu'**il comprend des moyens de maintien axial de la pièce radialement externe (24) sur la pièce radialement interne.

6. Dispositif selon la revendication 5, **caractérisé en ce que** les moyens de maintien axial comprennent un élément annulaire (40, 46, 48) formant coin entre la pièce radialement interne et la pièce radialement externe et maintenu en position entre ces deux pièces par des moyens de fixation ou de blocage.

7. Dispositif selon la revendication 6, **caractérisé en ce que** les moyens de fixation comprennent des vis (54) parallèles à l'axe de la jante et engagées dans des trous correspondants de l'élément annulaire (40) et de la pièce radialement interne (22).

8. Dispositif selon la revendication 7, **caractérisé en ce que** les vis sont vissées dans des écrous (56) logés dans les trous précités de la pièce radialement interne ou noyés dans la matière constitutive de celle-ci.

9. Dispositif selon la revendication 6, **caractérisé en ce que** l'élément annulaire (48) comprend une surface interne cylindrique filetée et est vissé sur une portée cylindrique filetée correspondante de la pièce radialement interne (22).

10. Dispositif selon la revendication 6, **caractérisé en ce que** l'élément annulaire (40) est maintenu en position sur la pièce.radialement interne par encliquetage ou au moyen d'une rondelle fendue (42) logée dans une gorge d'une surface périphérique de la pièce radialement interne (22).

11. Dispositif selon la revendication 5, **caractérisé en ce que** les moyens de maintien axial de la pièce radialement externe (24) sur la pièce radialement interne comprennent des rainures et nervures circonférentielles (30, 32) formées dans des surfaces de contact entre la pièce radialement interne et la pièce annulaire radialement externe.

12. Dispositif selon l'une des revendications précédentes, **caractérisé en ce qu'**il comporte une pièce annulaire intermédiaire coaxiale ouverte (60, 124) emboîtée entre lesdites pièces radialement interne (22) et radialement externe (24).

13. Dispositif selon la revendication 12, **caractérisé en ce que** les surfaces de contact les pièces radialement interne (22) et la pièce annulaire intermédiaire sont, au moins en partie, tronconiques.

14. Dispositif selon la revendication 12 ou 13, **caractérisé en ce qu'**il comprend des moyens de maincien axial l'une sur l'autre des pièces (22, 60) radialement interne et intermédiaire, ces moyens étant tels par exemple que des rainures et nervures circonférentielles formées dans les surfaces de contact entre ces deux pièces.

15. Dispositif selon l'une des revendications précédentes, **caractérisé en ce que** la pièce annulaire radialement interne et/ou la pièce intermédiaire (22, 60) sont en matière plastique rigide et la pièce annulaire radialement externe (24) est à base de caoutchouc ou d'élastomère.

16. Dispositif selon l'une des revendications précédentes, **caractérisé en ce que** la pièce annulaire radialement interne (22) est formée d'au moins deux parties (22a, 22b) incurvées en arc de cercle, placées bout à bout autour de la jante (12).

17. Dispositif selon la revendication 16,
**caractérisé en ce que** les parties précitées (22a, 22b) de la pièce annulaire radialement interne sont maintenues sur la jante par un joint torique (58) ou analogue, logé dans une gorge de la surface extérieure desdites parties (22a, 22b).

18. Dispositif selon l'une des revendications précédentes, **caractérisé en ce qu'**une couche de caoutchouc ou analogue est interposée entre la jante (12) et la pièce annulaire radialement interne (22).

19. Dispositif de roulage à plat pour véhicule automobile, selon l'une des revendications 12 à 18 et comprenant au moins une pièce annulaire ouverte radialement interne (22) et une pièce annulaire ouverte intermédiaire (124) en matière relativement rigide et destinées à être montées l'un sur l'autre autour de la jante de la roue, et une pièce annulaire radialement externe continue (24) sensiblement inextensible et destinée à être montée sur la pièce annulaire ouverte intermédiaire (124), **caractérisé en ce que** la surface périphérique externe de la pièce annulaire intermédiaire (124) est formée avec une gorge ou rainure circonférentielle (132) de réception de la pièce annulaire radialement externe (24), cette gorge ou rainure (132) étant à section transversale sensiblement en U.

20. Dispositif selon une quelconque des revendications 12 à 19 et comprenant au moins une pièce annulaire ouverte intermédiaire (24), **caractérisé en ce que** la surface périphérique radialement externe de la pièce annulaire intermédiaire (124) est sensiblement parallèle à l'axe de cette pièce.

21. Dispositif selon l'une quelconque des revendications 1 à 20, **caractérisé en ce que** la pièce annulaire radialement externe (24) est à section sensiblement rectangulaire.

22. Dispositif selon l'une quelconque des des revendications 1 à 21, **caractérisé en ce que** la pièce annulaire radialement externe (24) comprend des éléments inextensibles tels que des spires de câblés (28), noyés dans une matière du type caoutchouc.

23. Dispositif selon la revendication 22, **caractérisé en ce que** la pièce annulaire radialement externe (24) comprend deux couches (160, 162) de caoutchouc de duretés différentes.

24. Dispositif selon l'une quelconque des des revendications 1 à 23, **caractérisé en ce que** la pièce annulaire radialement externe (24) est réversible.

25. Dispositif selon l'une des revendications 12 à 24 et comprenant au moins une pièce annulaire ouverte intermédiaire (24), **caractérisé en ce que** les surfaces en contact de la pièce annulaire radialement interne (22) et de la pièce annulaire intermédiaire (124) sont sensiblement tronconiques, avec un angle au sommet de l'ordre de 30 à 50°.

26. Dispositif selon la revendication 25, **caractérisé en ce que** les surfaces en contact de la pièce annulaire radialement interne (22) et de la pièce annulaire intermédiaire (124) sont formées, l'une avec au moins une rainure circonférentielle (30) et l'autre avec au moins une nervure circonférentielle (32) ayant des formes conjuguées et destinées à s'emboîter l'une dans l'autre, cette rainure (30) et cette nervure (32) ayant en section transversale une forme dissymétrique avec un côté extérieur oblique ou arrondi permettant de réduire les efforts de montage et de démontage de ces deux pièces l'une sur l'autre.

27. Dispositif selon l'une quelconque des des revendications 12 à 26 et comprenant au moins une pièce annulaire ouverte intermédiaire (24), **caractérisé en ce que** la distance entre des extrémités (150) de la pièce annulaire intermédiaire (124) à l'état libre est au moins égale à la différence entre la dimension périphérique externe de cette pièce annulaire intermédiaire (124) à l'état libre et la dimension périphérique interne de la pièce annulaire radialement externe (24).

28. Dispositif selon l'une quelconque des des revendications 12 à 27 et comprenant au moins une pièce annulaire ouverte intermédiaire (24), **caractérisé en ce que** la pièce annulaire radialement interne (22) et la pièce annulaire. intermédiaire (124) sont disposées angulairement l'une par rapport à l'autre de telle sorte que leurs ouvertures sont diamétralement opposées et que la valve de gonflage (146) montée sur la jante (12) passe dans l'ouverture de la pièce annulaire radialement interne (22).

29. Dispositif selon l'une quelconque des des revendications 12 à 28 et comprenant au moins un pièce annulaire ouverte intermédiaire (24), **caractérisé en ce que** la surface périphérique interne de la pièce intermédiaire (124) comporte une nervure ou saillie locale (152) destinée à être logée dans l'ouverture de la pièce annulaire radialement interne (22) pour immobiliser en rotation la pièce annulaire intermédiaire (124) sur la pièce annulaire radialement interne (22).

30. Dispositif selon l'une quelconque des des revendications 12 à 29 et comprenant au moins une pièce annulaire ouverte intermédiaire (24), **caractérisé en ce qu'**un flanc de la pièce annulaire intermédiaire (124) comprend un bossage annulaire (158) en saillie, formant surface d'appui pour le démontage du dispositif.

31. Dispositif selon l'une quelconque des des revendications 12 à 30 et comprenant au moins un pièce annulaire ouverte intermédiaire (24), **caractérisé en ce que** le fond de la gorge (132) formée dans la surface périphérique radialement externe de la pièce annulaire intermédiaire (124) pour la réception de la pièce annulaire radialement externe (24) est ondulé.

32. Procédé de montage d'un dispositif de roulage à plat sur une roue de véhicule automobile, **caractérisé en ce que** ce dispositif comprend au moins une pièce annulaire radialement interne (22) et une pièce annulaire intermédiaire (124) en matière relativement rigide, ouvertes en au moins un point de leur périphérie et destinées à être montées l'une sur l'autre autour de la jante (12) de la roue, et une pièce annulaire radialement externe (24) continue et coaxiale aux deux précédentes, cette pièce radialement externe étant sensiblement inextensible et ayant un diamètre intérieur supérieur au diamètre extérieur du rebord (16) de la jante, et **en ce qu'**il consiste à monter la pièce annulaire ouverte radialement interne (22) sur la jante (12), cette pièce radialement interne étant bloquée sur la jante (12) en translation axiale, à introduire la pièce annulaire intermédiaire (124) à l'intérieur du pneumatique (10) et à la placer autour de la jante (12) au voisinage de la pièce annulaire radialement interne (22), à introduire la pièce annulaire radialement externe (24) à l'intérieur du pneumatique et à la monter sur la pièce annulaire intermédiaire (124), puis à pousser l'ensemble formé par les pièces annulaires intermédiaire et radialement externe (124, 24) sur la pièce annulaire radialement interne (22) jusqu'à encliquetage, les surfaces annulaires en regard des pièces annulaires radialement interne et intermédiaire (22, 124) ayant des formes conjuguées, notamment sensiblement tronconiques, avec des moyens tels que des nervures (32) et des rainures (28) de formes conjuguées, ces surfaces annulaires coopérant entre elles pour assurer à la fois le serrage de la pièce radialement interne (22) sur la jante (12) et le positionnement axial et le blocage en position de la pièce annulaire intermédiaire (124) sur la pièce radialement interne (22).

33. Procédé selon la revendication 32, **caractérisé en ce que** la pièce annulaire radialement externe (24) ayant un diamètre interne inférieur au diamètre externe de la pièce annulaire intermédiaire (124) à l'état libre, il consiste à resserrer la pièce annulaire intermédiaire (124) en rapprochant ses extrémités l'une de l'autre avant de monter la pièce annulaire radialement externe (24) sur la pièce intermédiaire, autour de la jante (12).

34. Procédé de démontage d'un dispositif de roulage à plat monté sur une roue par exécution du procédé selon la revendication 32 ou 33, **caractérisé en ce qu'**il consiste à pousser sur la pièce annulaire intermédiaire (124) dans une direction opposée à la direction de poussée au montage, pour dégager de la pièce annulaire radialement interne (22) l'ensemble formé par les pièces annulaires intermédiaire et radialement externe (124, 24), puis à resserrer sur elle-même la pièce annulaire intermédiaire (124), à dégager la pièce annulaire radialement externe (24) de la pièce intermédiaire (124) et à la sortir de la jante (12), puis à sortir successivement de la jante la pièce annulaire intermédiaire et la pièce annulaire radialement interne (124, 22).

35. Procédé selon l'une des revendications 32 à 34, **caractérisé en ce que** pour le montage et le démontage du dispositif de roulage à plat, le talon extérieur (18) du pneumatique (10) est dégagé du rebord (16) de la jante, pour permettre l'introduction des trois pièces annulaires (22, 124, 24) à l'intérieur du pneumatique et leur disposition autour de la jante (12).

## Claims

1. A run-flat device for a motor vehicle, the device being designed to be fitted clamped on a standard rim (12) having lateral flanges (16) for holding the beads (18) of a tire, the device being **characterized in that** it is constituted by at least two coaxial annular pieces (22, 24) engaged one on the other, the radially-inner piece being of relatively rigid material and forming an open ring around the rim, the radially-outer piece being based on an elastically deformable material and comprising a one-piece continuous surrounding the radially-inner annular piece (22) and having an inside diameter that is substantially equal to or greater than the outside diameter of a lateral flange (16) of the rim.

2. A device according to claim 1, **characterized in that** the radially-outer piece (24) has an inside diameter slightly smaller than the outside diameter of the radially-inner annular piece (22) and is engaged by force thereon.

3. A device according to claim 1 or 2, **characterized in that** the radially-outer annular piece (24) includes substantially inextensible annular means (28, 44), e.g. embedded in the material constituting the radially-outer piece.

4. A device according to any preceding claim, **characterized in that** the contact surfaces between the two coaxial pieces (22, 24) are frustoconical, at least in part.

5. A device according to any preceding claim, **characterized in that** it includes axial holding means for holding the radially-outer piece (24) axially on the radially-inner piece.

6. A device according to claim 5, **characterized in that** the axial holding means comprise an annular element (40, 46, 48) forming a wedge between the radially-inner piece and the radially-outer piece and held in position between said two pieces by fixing or locking means.

7. A device according to claim 6, **characterized in that** the fixing means comprise screws (54) parallel to the axis of the rim and engaged in corresponding holes in the annular element (40) and the radially-inner piece (22).

8. A device according to claim 7, **characterized in that** the screws are screwed into nuts (56) received in said holes of the radially-inner piece or embedded in the material constituting it.

9. A device according to claim 6, **characterized in that** the annular element (48) has a threaded cylindrical inner surface and is screwed on a corresponding threaded cylindrical bearing surface of the radially-inner piece (22).

10. A device according to claim 6, **characterized in that** the annular element (40) is held in position on the radially-inner piece by snap-fastening or by means of a split washer (42) received in a groove in a peripheral surface of the radially-inner piece (22).

11. A device according to claim 5, **characterized in that** the axial holding means for holding the radially-outer piece (24) on the radially-inner piece comprise circumferential grooves and ribs (30, 32) formed in contact surfaces between the radially-inner piece and the radially-outer annular piece.

12. A device according to any preceding claim, **characterized in that** it includes an intermediate annular piece (60, 124) that is open and that is engaged coaxially between said radially-inner piece (22) and said radially-outer piece (24).

13. A device according to claim 12, **characterized in that** the contact surfaces between the radially-inner piece (22) and the intermediate annular piece are frustoconical, at least in part.

14. A device according to claim 12 or 13, **characterized in that** it includes axial holding means for holding the radially-inner piece (22) relative to the intermediate piece (60), said means being constituted, for example, by circumferential grooves and ribs formed in the contact surfaces between said two pieces.

15. A device according to any preceding claim, **characterized in that** the radially-inner annular piece (22) and/or the intermediate piece (60) are made of rigid plastics material, and the radially-outer annular piece (24) is based on rubber or elastomer.

16. A device according to any preceding claim, **characterized in that** the radially-inner annular piece (22) is formed of at least two circularly-arcuate curved portions (22a, 22b) placed end to end around the rim (12).

17. A device according to claim 16, **characterized in that** the said portions (22a, 22b) of the radially-inner annular piece are held on the rim by an 0-ring (58) or the like, received in a groove in the outer surface of said portions (22a, 22b).

18. A device according to any preceding claim, **characterized in that** a layer of rubber to the like is interposed between the rim (12) and the radially-inner annular piece (22).

19. A run-flat device for a motor vehicle according to any one of claims 12 to 18, and comprising at least:
a radially-inner annular piece (22) that is open and an intermediate annular piece (124) that is open made of relatively rigid material and designed to be fitted one on the other around the rim of the wheel; and
a substantially inextensible radially-outer annular piece (24) that is continuous and that is designed to be fitted on the intermediate open annular piece (124);
the device being **characterized in that** the outer peripheral surface of the intermediate annular piece (124) is formed with a circumferential groove or channel (132) for receiving the radially-outer annular piece (24), said groove or channel (132) being of substantially U-shaped cross-section.

20. A device according to any one of claims 12 to 19 and comprising at least an intermediate open annular piece (124), **characterized in that** the radially-outer peripheral surface of the intermediate annular piece (124) is substantially parallel to the axis of said piece.

21. A device according to any one of claims 1 to 20, **characterized in that** the radially-outer annular piece (24) is of substantially rectangular section.

22. A device according to any one of claims 1 to 21, **characterized in that** the radially-outer annular piece (24) comprises inextensible elements such as turns of cord (28) embedded in a rubber type material.

23. A device according to claim 22, **characterized in that** the radially-outer annular piece (24) comprises two layers (160, 162) of rubbers of different hardnesses.

24. A device according to any one of claims 1 to 23, **characterized in that** the radially-outer annular piece (24) is reversible.

25. A device according to any one of claims 12 to 24 and comprising at least an intermediate open annular piece (124), **characterized in that** the contact surfaces of the radially-inner annular piece (22) and of the intermediate annular piece (124) are substantially frustoconical, having an angle at the apex of the order of 30° to 50°.

26. A device according to claim 25, **characterized in that** the contact surfaces of the radially-inner annular piece (22) and of the intermediate annular piece (124) are formed so that one has at least one circumferential groove (30) and the other has at least one circumferential rib (32) of complementary shape and designed to engage in the groove, said groove (30) and said rib (32) being of asymmetrical cross-section so as to have a rounded or sloping outside side for reducing the forces required for fitting and stripping these two pieces relative to each other.

27. A device according to any one of claims 12 to 26 and comprising at least an intermediate open annular piece (124), **characterized in that** the distance between the ends (150) of the intermediate annular piece (124) when it is in the free state is not less than the difference between the outer peripheral dimension of said intermediate annular piece (124) when it is in the free state, and the inner peripheral dimension of the radially-outer annular piece (24).

28. A device according to any one of claims 12 to 27 and comprising at least an intermediate open annular piece (124), **characterized in that** the radially-inner annular piece (22) and the intermediate annular piece (124) are disposed angularly relative to each other in such a manner that their respective openings are diametrically opposite, and the inflation valve (146) fitted to the rim (12) passes through the opening in the radially-inner annular piece (22).

29. A device according to any one of claims 12 to 28 and comprising at least an intermediate open annular piece (124), **characterized in that** the inner peripheral surface of the intermediate piece (124) has a local projection or rib (152) designed to be received in the opening of the radially-inner annular piece (22) to prevent the intermediate annular piece (124) from rotating on the radially-inner annular piece (22).

30. A device according to any one of claims 12 to 29 and comprising at least an intermediate open annular piece (124), **characterized in that** one of the walls of the intermediate annular piece (124) has an annular projection (158) forming a bearing surface for stripping the device.

31. A device according to any one of claims 12 to 30 and comprising at least an intermediate open annular piece (124), **characterized in that** the bottom of the channel (132) formed in the radially-outer peripheral surface of the intermediate annular piece (124) for receiving the radially-outer annular piece (24) is corrugated.

32. A method of fitting a run-flat device on a motor vehicle wheel, the method being **characterized in that** said device comprises at least:
a radially-inner annular piece (22) and an intermediate annular piece (124) of relatively rigid material and open at at least one point in each of their peripheries, being designed to be fitted one on the other around the rim (12) of the wheel; and
a radially-outer annular piece (24) that is continuous and coaxial with the two preceding pieces, said radially-outer piece being substantially inextensible and having an inside diameter greater than the outside diameter of the flange (16) of the rim;
and **in that** the method consists:
in fitting the radially-inner annular piece (22) that is open on the rim (12), said radially-inner piece being prevented from moving in axial translation on the rim (12);
in inserting the intermediate annular piece (124) inside the tire (10) and in placing it around the rim (12) in the vicinity of the radially-inner annular piece (22);
in inserting the radially-outer annular piece (24) inside the tire and in fitting it on the intermediate annular piece (124); and then
in pushing the assembly formed by the intermediate annular piece (124) and the radially-outer piece (24) onto the radially-inner annular piece (22) until snap-fastening occurs, the facing annular surfaces of the radially-inner annular piece (22) and of the intermediate annular piece (124) having complementary shapes, and in particular shapes that are substantially frustoconical, together with means such as ribs (32) and grooves (28) of complementary shapes, said annular surfaces co-operating mutually both to clamp the radially-inner piece (22) on the rim (12) and to position the intermediate annular piece (124) axially on the radially-inner piece (22), and to lock it in position.

33. A device according to claim 32, **characterized in that** since the radially-outer annular piece (24) has an inside diameter smaller than the outside diameter of the intermediate annular piece (124) in the free state, the method consists in tightening the intermediate annular piece (124) by moving its ends towards each other prior to fitting the radially-outer annular piece (24) on the intermediate piece while it is around the rim (12).

34. A method of stripping a run-flat device fitted on a wheel by performing the method according to claim 32 or 33, the stripping method being **characterized in that** it consists:
in pushing the intermediate annular piece (124) in a direction opposite to the direction in which it is pushed during fitting, so as to disengage the assembly formed by the intermediate annular piece (124) and the radially-outer annular piece (24) from the radially-inner annular piece (22);
in tightening the intermediate annular piece (124);
in disengaging the radially-outer annular piece (24) from the intermediate piece (124) and extracting it from the rim (12); and then
in extracting in succession the intermediate annular piece (124) and the radially-inner annular piece (22) from the rim.

35. A device according to any one of claims 32 to 34, **characterized in that** for fitting and stripping the run-flat device, the outside bead (18) of the tire (10) is disengaged from the flange (16) of the rim so as to enable all three annular pieces (22, 124, 24) to be inserted inside the tire and disposed around the rim (12).

## Patentansprüche

1. Notlaufvorrichtung für ein Kraftfahrzeug zum Aufspannen auf eine reguläre Felge (12) mit seitlichen Rändern (16) zum Halten der Wülste (18) eines Luftreifens, **dadurch gekennzeichnet, daß** sie aus mindestens zwei aufeinandergesteckten koaxialen Ringteilen (22, 24) besteht, wobei das in Radialrichtung innere Teil aus einem relativ steifen Werkstoff besteht und um die Felge einen offenen Ring bildet, und das in Radialrichtung äußere Teil auf der Basis eines elastisch verformbaren Werkstoffes ist und einen einstückigen, kontinuierlichen Ring aufweist, der das in Radialrichtung innere Ringteil (22) umgibt und einen Innendurchmesser aufweist, der im wesentlichen gleich oder größer als der Außendurchmesser eines seitlichen Randes (16) der Felge ist.

2. Vorrichtung nach Anspruch 1, **dadurch gekennzeichnet, daß** das in Radialrichtung äußere Teil (24) einen Innendurchmesser aufweist, der geringfügig kleiner als der Außendurchmesser des in Radialrichtung inneren Ringteils (22) ist, und durch Krafteinwirkung auf dieses aufgesteckt ist.

3. Vorrichtung nach Anspruch 1 oder 2, **dadurch gekennzeichnet, daß** das in Radialrichtung äußere Ringteil (24) ringförmige Mittel (28, 44) aufweist, die im wesentlichen nicht dehnbar und beispielsweise in das Material eingebettet sind, aus dem das in Radialrichtung äußere Teil besteht.

4. Vorrichtung nach einem der vorhergehenden Ansprüche, **dadurch gekennzeichnet, daß** die Kontaktflächen zwischen den beiden koaxialen Teilen (22, 24) zumindest teilweise stumpfkegelförmig sind.

5. Vorrichtung nach einem der vorhergehenden Ansprüche, **dadurch gekennzeichnet, daß** sie Mittel zum axialen Halten des in Radialrichtung äußeren Teils (24) auf dem in Radialrichtung inneren Teil aufweist.

6. Vorrichtung nach Anspruch 5, **dadurch gekennzeichnet, daß** die Mittel zum axialen Halten ein ringförmiges Element (40, 46, 48) aufweisen, das einen Keil zwischen dem in Radialrichtung inneren und äußeren Teil bildet und durch Befestigungs- bzw. Blockiermittel zwischen diesen beiden Teilen in Position gehalten wird.

7. Vorrichtung nach Anspruch 6, **dadurch gekennzeichnet, daß** die Befestigungsmittel Schrauben (54) aufweisen, die parallel zur Achse der Felge und in entsprechende Löcher des ringförmigen Elementes (40) und des in Radialrichtung inneren Teils (22) eingesetzt sind.

8. Vorrichtung nach Anspruch 7, **dadurch gekennzeichnet, daß** die Schrauben in Muttern (56) eingeschraubt sind, die in den genannten Löchern des in Radialrichtung inneren Teils vorgesehen oder in dem dieses Teil bildenden Material eingebettet sind.

9. Vorrichtung nach Anspruch 6, **dadurch gekennzeichnet, daß** das ringförmige Element (48) eine zylindrische Innenfläche mit Gewinde aufweist und auf eine entsprechende, mit einem Gewinde versehene zylindrische Lagerfläche des in Radialrichtung inneren Teils (22) aufgeschraubt ist.

10. Vorrichtung nach Anspruch 6, **dadurch gekennzeichnet, daß** das ringförmige Element (40) auf dem in Radialrichtung inneren Teil durch Einrasten oder mittels einer Schlitzscheibe (42) in Position gehalten wird, welche in einer Kehlung einer Umfangsfläche des in Radialrichtung inneren Teils (22) sitzt.

11. Vorrichtung nach Anspruch 5, **dadurch gekennzeichnet, daß** die Mittel zum axialen Halten des in Radialrichtung äußeren Teils (24) auf dem in Radialrichtung inneren Teil Umfangsnuten und -rippen (30, 32) aufweisen, die in Kontaktflächen zwischen dem in Radialrichtung inneren und äußeren Ringteil ausgebildet sind.

12. Vorrichtung nach einem der vorhergehenden Ansprüche, **dadurch gekennzeichnet, daß** sie ein koaxiales offenes ringförmiges Zwischenteil (60, 124) aufweist, das zwischen dem in Radialrichtung inneren (22) und äußeren (24) Teil eingefügt ist.

13. Vorrichtung nach Anspruch 12, **dadurch gekennzeichnet, daß** die Kontaktflächen des in Radialrichtung inneren Teils (22) und des ringförmigen Zwischenteils zumindest teilweise stumpfkegelförmig sind.

14. Vorrichtung nach Anspruch 12 oder 13, **dadurch gekennzeichnet, daß** sie Mittel zum axialen Aufeinanderhalten des in Radialrichtung inneren Teils und des Zwischenteils (22, 60) aufweist, wobei diese Mittel beispielsweise derart sind, daß in den Kontaktflächen zwischen diesen beiden Teilen Nuten und Rippen ausgebildet sind.

15. Vorrichtung nach einem der vorhergehenden Ansprüche, **dadurch gekennzeichnet, daß** das in Radialrichtung innere Ringteil und/oder das Zwischenteil (22, 60) aus steifem Plastikmaterial bestehen, und das in Radialrichtung äußere Ringteil (24) auf der Basis von Gummi oder Elastomer ist.

16. Vorrichtung nach einem der vorhergehenden Ansprüche, **dadurch gekennzeichnet, daß** das in Radialrichtung innere Ringteil (22) aus mindestens zwei Abschnitten (22a, 22b) gebildet ist, die kreisbogenförmig gekrümmt und Ende an Ende um die Felge (12) angeordnet sind.

17. Vorrichtung nach Anspruch 16, **dadurch gekennzeichnet, daß** die genannten Abschnitte (22a, 22b) des in Radialrichtung inneren Ringteils durch einen O-Ring (58) oder dergleichen, der in einer Kehlung der Außenfläche der Abschnitte (22a, 22b) sitzt, auf der Felge gehalten werden.

18. Vorrichtung nach einem der vorhergehenden Ansprüche, **dadurch gekennzeichnet, daß** eine Schicht aus Gummi oder dergleichen zwischen der Felge (12) und dem in Radialrichtung inneren Ringteil (22) angeordnet ist.

19. Notlaufvorrichtung für ein Kraftfahrzeug nach einem der Ansprüche 12 bis 18, welche mindestens ein in Radialrichtung inneres, offenes Ringteil (22) und ein in Radialrichtung äußeres, offenes ringförmiges Zwischenteil (124) aus einem relativ steifen Werkstoff aufweist, die dazu bestimmt sind, aufeinander um die Felge des Rades montiert zu werden, sowie ein kontinuierliches, in Radialrichtung äußeres Ringteil (24), das im wesentlichen nicht dehnbar ist und dazu bestimmt ist, auf dem in Radialrichtung äußeren, offenen ringförmigen Zwischenteil (124) montiert zu werden, **dadurch gekennzeichnet, daß** die äußere Umfangsfläche des ringförmigen Zwischenteils (124) mit einer Umfangskehlung bzw. -nut (132) zum Aufnehmen des in Radialrichtung äußeren Ringteils (24) ausgebildet ist, wobei diese Kehlung oder Nut (132) einen im wesentlichen U-förmigen Querschnitt besitzt.

20. Vorrichtung nach einem der Ansprüche 12 bis 19, welche mindestens ein offenes ringförmiges Zwischenteil (124) aufweist, **dadurch gekennzeichnet, daß** die in Radialrichtung äußere Umfangsfläche des ringförmigen Zwischenteils (124) im wesentlichen parallel zur Achse dieses Teils ist.

21. Vorrichtung nach einem der Ansprüche 1 bis 20, **dadurch gekennzeichnet, daß** das in Radialrichtung äußere Ringteil (24) einen im wesentlichen rechteckigen Querschnitt aufweist.

22. Vorrichtung nach einem der Ansprüche 1 bis 21, **dadurch gekennzeichnet, daß** das in Radialrichtung äußere Ringteil (24) nicht-dehnbare Elemente wie etwa Lagen aus Kordfäden (28) aufweist, die in ein Material vom Typ Gummi eingebettet sind.

23. Vorrichtung nach Anspruch 22, **dadurch gekennzeichnet, daß** das in Radialrichtung äußere Ringteil (24) zwei Schichten (160, 162) aus Gummi mit einer unterschiedlichen Härte aufweist.

24. Vorrichtung nach einem der Ansprüche 1 bis 23, **dadurch gekennzeichnet, daß** das in Radialrichtung äußere Ringteil (24) reversibel ist.

25. Vorrichtung nach einem der Ansprüche 12 bis 24, welche mindestens ein offenes ringformigeß Zwischenteil (124) aufweist, **dadurch gekennzeichnet, daß** die in Berührung stehenden Flächen des in Radialrichtung inneren Ringteils (22) und des ringförmigen Zwischenteils (124) im wesentlichen stumpfkegelförmig sind, mit einem Winkel am Scheitel in der Größenordnung von 30 bis 50°.

26. Vorrichtung nach Anspruch 25, **dadurch gekennzeichnet, daß** die in Berührung stehenden Flächen des in Radialrichtung inneren Ringteils (22) und des ringförmigen Zwischenteils (124) wechselseitig jeweils mit mindestens einer Umfangsnut (30) und das andere mit mindestens einer Umfangsrippe (32) mit komplementärer Formgebung ausgebildet sind, die dazu bestimmt sind, sich ineinanderzufügen, wobei die Nut (30) und die Rippe (32) im Querschnitt eine nicht-symmetrische Formgebung mit einer schrägen oder gerundeten Außenseite aufweisen, die es gestattet, die Anstrengungen beim Montieren oder Demontieren dieser beiden Teile aufeinander zu verringern.

27. Vorrichtung nach einem der Ansprüche 12 bis 26, welche mindestens ein offenes ringförmiges Zwischenteil (124) aufweist, **dadurch gekennzeichnet, daß** der Abstand zwischen Enden (150) des ringförmigen Zwischenteils (124) im freien zustand mindestens gleich der Differenz zwischen der Außenumfangsabmessung des ringförmigen Zwischenteils (124) im freien Zustand und der Innenumfangsabmessung des in Radialrichtung äußeren Ringteils (24) ist.

28. Vorrichtung nach einem der Ansprüche 12 bis 27, welche mindestens ein offenes ringförmiges Zwischenteil (124) aufweist, **dadurch gekennzeichnet, daß** das in Radialrichtung innere Ringteil (22) und das ringförmige Zwischenteil (124) mit einem solchen Winkel zueinander angeordnet sind, daß ihre Öffnungen diametral entgegengesetzt sind, und das auf der Felge (12) angebrachte Aufblasventil (146) sich in die Öffnung des in Radialrichtung inneren Ringteils (22) einfügt.

29. Vorrichtung nach einem der Ansprüche 12 bis 28, welche mindestens ein offenes ringformiges Zwischenteil (124) aufweist, **dadurch gekennzeichnet, daß** die Innenumfangsfläche des Zwischenteils (124) eine örtliche Rippe oder einen örtlichen Vorsprung (152) aufweist, die bzw. der dazu bestimmt ist, in die Öffnung des in Radialrichtung inneren Ringteils (22) eingefügt zu werden, um das ringförmige Zwischenteil (124) auf dem in Radialrichtung inneren Ringteil (22) an einer Drehung zu hindern.

30. Vorrichtung nach einem der Ansprüche 12 bis 29, welche mindestens ein offenes ringförmiges Zwischenteil (124) aufweist, **dadurch gekennzeichnet, daß** eine Flanke des ringförmigen Zwischenteils (124) eine vorstehende ringförmige Erhebung (158) aufweist, die eine Abstützfläche für die Demontage der Vorrichtung aufweist.

31. Vorrichtung nach einem der Ansprüche 12 bis 30, welche mindestens ein offenes ringförmiges Zwischenteil (124) aufweist, **dadurch gekennzeichnet, daß** der Boden der in der in Radialrichtung äußeren Umfangsfläche des ringförmigen Zwischenteils (124) für die Aufnahme des in Radialrichtung äußeren Ringteils (24) ausgebildeten Kehlung (132) gewellt ist.

32. Verfahren zum Montieren einer Notlaufvorrichtung auf einem Rad eines Kraftfahrzeugs, **dadurch gekennzeichnet, daß** die Vorrichtung mindestens ein in Radialrichtung inneres Ringteil (22) und ein ringförmiges Zwischenteil (124) aus relativ steifem Material aufweist, die an mindestens einem Punkt ihres Umfangs offen und dazu bestimmt sind, aufeinander um die Felge (12) des Rades montiert zu werden, sowie ein kontinuierliches und zu den beiden vorgenannten koaxiales, in Radialrichtung äußeres Ringteil (24), wobei dieses in Radialrichtung äußere Teil im wesentlichen nicht dehnbar ist und einen Innendurchmesser aufweist, der größer als der Außendurchmesser des Randes (16) der Felge ist, sowie dadurch, daß es darin besteht, das in Radialrichtung innere offene Ringteil (22) auf der Felge (12) zu montieren, wobei das in Radialrichtung innere Teil auf der Felge (12) in Querverschiebung blockiert ist, das ringförmige Zwischenteil (124) ins Innere des Luftreifens (10) einzuführen und es um die Felge (12) benachbart zu dem in Radialrichtung inneren Ringteil (22) anzuordnen, das in Radialrichtung äußere Ringteil (24) ins Innere des Reifens einzuführen und es auf dem ringförmigen Zwischenteil (124) zu montieren, daraufhin die aus dem ringförmigen Zwischenteil und dem in Radialrichtung äußeren Teil (124, 24) gebildete Einheit bis zum Einrasten auf das in Radialrichtung innere Ringteil zu schieben, wobei die dem in Radialrichtung inneren Ringteil und dem ringförmigen Zwischenteil (22, 124) gegenüberliegenden Ringflächen eine komplementäre, insbesondere stumpfkegelförmige Formgebung aufweisen, mit Mitteln wie Rippen (32) und Nuten (28) mit komplementärer Formgebung, wobei diese Ringflächen so zusammenwirken, daß sie gleichzeitig das Einspannen des in Radialrichtung inneren Teils (22) auf der Felge (12) und die axiale Positionierung und das Festlegen des ringförmigen Zwischenteils (124) auf dem in Radialrichtung inneren Teil (22) bewirken.

33. Verfahren nach Anspruch 32, **dadurch gekennzeichnet, daß** es dadurch, daß das in Radialrichtung äußere Ringteil (24) im freien Zustand einen Innendurchmesser aufweist, der kleiner als der Außendurcbmesser des ringförmigen Zwischenteils (124) ist, darin besteht, das ringförmige Zwischenteil (124) durch gegenseitiges Annähern seiner Enden vor dem Montieren des in Radialrichtung äußeren ringförmigen Teils (24) auf dem Zwischenteil um die Felge (12) zu verengen.

34. Verfahren zum Demontieren einer durch Ausführen des Verfahrens nach Anspruch 32 oder 33 auf einem Rad montierten Notlaufvorrichtung, **dadurch gekennzeichnet, daß** es darin besteht, das ringförmige Zwischenteil (124) in eine zur Schubrichtung beim Montieren entgegengesetzte Richtung zu schieben, um die von dem ringförmigen Zwischenteil und dem in Radialrichtung äußeren Teil (124, 24) gebildete Einheit von dem in Radialrichtung inneren Ringteil (22) zu lösen, daraufhin das ringförmige Zwischenteil (124) auf sich selbst zu verengen, das in Radialrichtung äußere ringförmige Teil (24) von dem Zwischenteil (124) zu lösen und es von der Felge (12) zu lösen, daraufhin das ringförmige zwischenteil und das in Radialrichtung innere ringförmige Teil (124, 22) nacheinander von der Felge abzunehmen.

35. Verfahren nach einem der Ansprüche 32 bis 34, **dadurch gekennzeichnet, daß** für die Montage und die Demontage der Notlaufvorrichtung der äußere Wulst (18) des Reifens (10) vom Rand (16) der Felge gelöst wird, um das Einführen der drei Ringteile (22, 124, 24) ins Innere des Reifens und ihre Anordnung um die Felge (12) zu ermöglichen.
